# EUROPEAN PATENT APPLICATION

(11) **EP 4 280 682 A1**
(43) Date of publication of application: **22.11.2023**
(21) Application number: 21920255.3
(22) Date of filing: 21.01.2021
(51) Int. Cl.: H04W 36/00, H04W 8/08

(54) **WIRELESS COMMUNICATION METHOD, COMMUNICATION APPARATUS AND COMMUNICATION SYSTEM**

(71) Applicant: Huawei Technologies Co., Ltd., Shenzhen, Guangdong 518129 (CN)
(72) Inventor: ZHU, Fangyuan, Shenzhen, Guangdong 518129 (CN); LI, Yan, Shenzhen, Guangdong 518129 (CN); SUN, Haiyang, Shenzhen, Guangdong 518129 (CN)
(74) Representative: Huawei European IPR
(86) International application number: PCT/CN2021/073130
(87) International publication number: WO 2022/155853

(57) **Abstract**

Embodiments of this application provide a wireless communication method, a communication apparatus, and a communication system. The method includes: A mobility management network element receives a handover request from a source access network device, where the handover request includes an identifier of a first session, the first session corresponds to a first network slice, and the first session is used to transmit a data packet of a first application; when determining that a target access network device does not support the first network slice, determines a second network slice supported by the target access network device; and triggers the target access network device to transmit the data packet of the first application through the second network slice. In this solution, after a terminal device moves out of coverage of the first network slice, when the target access network device does not support the first network slice corresponding to the first session, the second network slice supported by the target access network device is selected, so that the target access network device transmits, through the second network slice, the data packet of the first application that is originally transmitted in the first session, thereby ensuring service continuity and helping improve user experience.

## Description

### TECHNICAL FIELD

Embodiments of this application relate to the field of wireless communication technologies, and in particular, to a wireless communication method, a communication apparatus, and a communication system.

### BACKGROUND

When a terminal device is in a connected state, a handover procedure is triggered as the terminal device moves. If there is an Xn interface between a source access network device and a target access network device to which the terminal device is to be handed over, the terminal device may be handed over from the source access network device to the target access network device through a handover procedure of the Xn interface. If an Xn-based handover cannot be performed between the source access network device and the target access network device to which the terminal device is to be handed over, the terminal device may be handed over to the target access network device through an NG-based handover (or referred to as an N2-based handover) procedure.

Based on the Xn-based handover procedure or the NG-based handover procedure, when the terminal device moves out of coverage of a slice, if the target access network device does not support the slice associated with a session currently established by the terminal device, the target access network device rejects the session to be handed over to the target access network device. Consequently, session continuity of the session cannot be maintained on a target side, and service experience of the terminal device is affected. For example, when the terminal device moves out of coverage of a slice 1, but the target access network device does not support the slice 1 associated with a session currently established by the terminal device, the target access network device rejects the session to be handed over to the target access network device.

### SUMMARY

Embodiments of this application provide a wireless communication method, a communication apparatus, and a communication system, to ensure service continuity in a process in which a terminal device is handed over from a source access network device to a target access network device.

According to a first aspect, an embodiment of this application provides a wireless communication method, applied to a handover procedure in which a terminal device is handed over from a source access network device to a target access network device, and including: A mobility management network element receives a handover request from the source access network device, where the handover request includes an identifier of a first session, the first session corresponds to a first network slice, and the first session is used to transmit a data packet of a first application. When determining that the target access network device does not support the first network slice, the mobility management network element determines a second network slice supported by the target access network device. The mobility management network element triggers the target access network device to transmit the data packet of the first application through the second network slice.

Based on the foregoing solution, after a terminal device moves out of coverage of the first network slice, when the target access network device does not support the first network slice corresponding to the first session, the mobility management network element selects the second network slice supported by the target access network device, so that the target access network device transmits, through the second network slice, the data packet of the first application that is originally transmitted in the first session. Therefore, service continuity is ensured in a procedure in which the terminal device is handed over from the source access network device to the target access network device, thereby improving user experience.

In a possible implementation method, the first network slice and the second network slice can access a same data network; and/or a session management network element and/or a user plane network element corresponding to the first session support/supports both the first network slice and the second network slice.

In a possible implementation method, the mobility management network element sends an identifier of the second network slice to the session management network element. The mobility management network element receives first information from the session management network element, where the first information includes the identifier of the second network slice. That the mobility management network element triggers the target access network device to transmit the data packet of the first application through the second network slice includes: The mobility management network element sends the first information to the target access network device, where the first information is used to trigger the target access network device to transmit the data packet of the first application through the second network slice.

In a possible implementation method, the mobility management network element sends an identifier of the second network slice and first indication information to the target access network device, where the first indication information indicates the target access network device to transmit the data packet of the first application through the second network slice.

In a possible implementation method, the mobility management network element receives second information from the session management network element, where the second information includes an identifier of the first network slice. The mobility management network element replaces the identifier of the first network slice in the second information with an identifier of the second network slice, to obtain third information. That the mobility management network element triggers the target access network device to transmit the data packet of the first application through the second network slice includes: The mobility management network element sends the third information to the target access network device, where the third information is used to trigger the target access network device to transmit the data packet of the first application through the second network slice.

In a possible implementation method, the mobility management network element sends, to the terminal device, an identifier of a network slice allowed to be accessed and second indication information, where the network slice allowed to be accessed includes the first network slice and the second network slice, and the second indication information indicates that the target access network device does not support the first network slice but supports the second network slice.

In a possible implementation method, the mobility management network element starts a timer. When the timer expires, the mobility management network element triggers release of the first session.

Based on this solution, the first session is released. On one hand, it can be ensured that the data packet of the first application is transmitted by the target access network device through the second network slice. On the other hand, because the first session cannot continue to transmit the data packet of the first application on a target side, the first session is released, thereby reducing resource overheads.

In a possible implementation method, that the mobility management network element triggers release of the first session includes: The mobility management network element releases the first session; or the mobility management network element sends, to the terminal device, information that indicates the terminal device to release the first session.

In a possible implementation method, the mobility management network element sends third indication information to the terminal device, where the third indication information is used to trigger the terminal device to initiate an establishment procedure of a second session through the source access network device, the second session corresponds to the second network slice, and the second session is used to transmit the data packet of the first application on the target access network device.

In a possible implementation method, the mobility management network element sends fourth indication information to the session management network element, where the fourth indication information indicates the session management network element to trigger the terminal device to initiate an establishment procedure of a second session through the source access network device, the second session corresponds to the second network slice, and the second session is used to transmit the data packet of the first application on the target access network device.

In a possible implementation method, the mobility management network element sends a handover preparation failure message to the source access network device, where the handover preparation failure message includes fifth indication information, and the fifth indication information indicates the source access network device to re-initiate an NG-based handover procedure.

According to a second aspect, an embodiment of this application provides a wireless communication method, applied to a handover procedure in which a terminal device is handed over from a source access network device to a target access network device, and including: The terminal device sends a data packet of a first application to the source access network device in a first session, where the first session corresponds to a first network slice. The terminal device receives indication information after the terminal device is handed over from the source access network device to the target access network device. The terminal device initiates, based on the indication information throug the target access network device, an establishment procedure of a second session, where the second session corresponds to a second network slice, and the second session is used to transmit the data packet of the first application.

Based on the foregoing solution, after the terminal device is handed over from the source access network device to the target access network device, the terminal device may initiate, based on the received indication information through the target access network device, the establishment procedure of the second session. Subsequently, the terminal device and the target access network device may transmit, in the second session, the data packet of the first application that is originally transmitted in the first session. Therefore, service continuity is ensured in a procedure in which the terminal device is handed over from the source access network device to the target access network device, thereby improving user experience.

In a possible implementation method, the indication information is from a session management network element, and the indication information is used to trigger the terminal device to initiate the establishment procedure of the second session.

In a possible implementation method, the indication information is from a mobility management network element, and the indication information indicates that the target access network device does not support the first network slice but supports the second network slice.

In a possible implementation method, the terminal device releases, based on the indication information, the first session.

Based on this solution, the first session is released. On one hand, it can be ensured that the data packet of the first application is transmitted in the second session on the target access network device. On the other hand, because the first session cannot continue to transmit the data packet of the first application on the target side, the first session is released, thereby reducing resource overheads.

In a possible implementation method, the terminal device from the mobility management network element receives information that indicates the terminal device to release the first session. The terminal device releases, based on the information that indicates the terminal device to release the first session, the first session.

According to a third aspect, an embodiment of this application provides a wireless communication method, applied to a handover procedure in which a terminal device is handed over from a source access network device to a target access network device, and including: The terminal device sends a data packet of a first application to the source access network device in a first session, where the first session corresponds to a first network slice. The terminal device receives, before the terminal device is handed over from the source access network device to the target access network device, indication information. The terminal device initiates, based on the indication information through the source access network device, an establishment procedure of a second session, where the second session corresponds to a second network slice, and the second session is used to transmit the data packet of the first application on the target access network device.

Based on the foregoing solution, before the terminal device is handed over from the source access network device to the target access network device, the terminal device may initiate, based on the received indication information through the source access network device, the establishment procedure of the second session. The terminal device and the source access network device may transmit, based on the second session, the data packet of the first application that is originally transmitted in the first session. After the terminal device is handed over from the source access network device to the target access network device, the terminal device and the target access network device may transmit, in the second session, the data packet of the first application that is originally transmitted in the first session. Therefore, service continuity is ensured in a procedure in which the terminal device is handed over from the source access network device to the target access network device, thereby improving user experience.

In a possible implementation method, the indication information is from a session management network element or a mobility management network element, and the indication information is used to trigger the terminal device to initiate the establishment procedure of the second session.

In a possible implementation method, the terminal device releases, based on the indication information, the first session.

Based on this solution, the first session is released. On one hand, it can be ensured that the data packet of the first application is transmitted by the target access network device through the second network slice. On the other hand, because the first session cannot continue to transmit the data packet of the first application on a target side, the first session is released, thereby reducing resource overheads.

According to a fourth aspect, an embodiment of this application provides a communication apparatus. The apparatus may be a mobility management network element, or may be a chip used in the mobility management network element. The apparatus has a function of implementing any implementation method of the first aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a terminal device, or may be a chip used in the terminal device. The apparatus has a function of implementing any implementation method of the second aspect or the third aspect. The function may be implemented by hardware, or may be implemented by hardware executing corresponding software. The hardware or the software includes one or more modules corresponding to the function.

According to a sixth aspect, an embodiment of this application provides a communication apparatus, including a processor and a memory. The memory is configured to store computer instructions. When the apparatus runs, the processor executes the computer instructions stored in the memory, so that the apparatus performs any implementation method in the first aspect to the third aspect.

According to a seventh aspect, an embodiment of this application provides a communication apparatus, including a processor, configured to be coupled to a memory, and the processor is configured to invoke a program stored in the memory, to perform any implementation method in the first aspect to the third aspect. The memory may be located inside or outside the apparatus. There are one or more processors.

According to an eighth aspect, an embodiment of this application provides a communication apparatus, including a unit or means (means) configured to perform steps of any implementation method in the first aspect to the third aspect.

According to a ninth aspect, an embodiment of this application provides a communication apparatus, including a processor and an interface circuit. The processor is configured to: communicate with another apparatus through the interface circuit, and perform any implementation method in the first aspect to the third aspect. There are one or more processors.

According to a tenth aspect, an embodiment of this application further provides a computer-readable storage medium, where the computer-readable storage medium stores instructions, and when the instructions are run on a computer, any implementation method in the first aspect to the third aspect is performed.

According to an eleventh aspect, an embodiment of this application further provides a computer program product. The computer program product includes a computer program. When a computer program runs, any implementation method in the first aspect to the third aspect is performed.

According to a twelfth aspect, an embodiment of this application further provides a chip system, including a processor, configured to perform any implementation method in the first aspect to the third aspect.

According to a thirteenth aspect, an embodiment of this application further provides a communication system, including a mobility management network element configured to perform any implementation of the method in the first aspect, and a source access network device configured to send a handover request to the mobility management network element.

In a possible implementation method, the communication system further includes a target access network device configured to transmit a data packet of a first application through a second network slice.

According to a fourteenth aspect, an embodiment of this application further provides a communication system, including a mobility management network element configured to perform any implementation method of the first aspect, and a target access network device configured to transmit a data packet of a first application through a second network slice.

### BRIEF DESCRIPTION OF DRAWINGS

FIG. 1(a) is a schematic diagram of a 5G network architecture based on a service-based architecture;
FIG. 1(b) is a schematic diagram of a 5G network architecture based on a point-to-point interface;
FIG. 2(a) is a schematic diagram of a wireless communication method according to an embodiment of this application;
FIG. 2(b) is a schematic diagram of a wireless communication method according to an embodiment of this application;
FIG. 2(c) is a schematic diagram of a wireless communication method according to an embodiment of this application;
FIG. 3A and FIG. 3B are a schematic diagram of a wireless communication method according to an embodiment of this application;
FIG. 4A and FIG. 4B are a schematic diagram of a wireless communication method according to an embodiment of this application;
FIG. 5A and FIG. 5B are a schematic diagram of a wireless communication method according to an embodiment of this application;
FIG. 6A and FIG. 6B are a schematic diagram of a wireless communication method according to an embodiment of this application;
FIG. 7 is a schematic diagram of a wireless communication method according to an embodiment of this application;
FIG. 8 is a schematic diagram of a communication apparatus according to an embodiment of this application; and
FIG. 9 is a schematic diagram of another communication apparatus according to an embodiment of this application.
FIG. 10 is a schematic diagram of a terminal device according to an embodiment of this application;
FIG. 11(a) is a schematic diagram of a communication system according to an embodiment of this application; and
FIG. 11(b) is a schematic diagram of another communication system according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment.

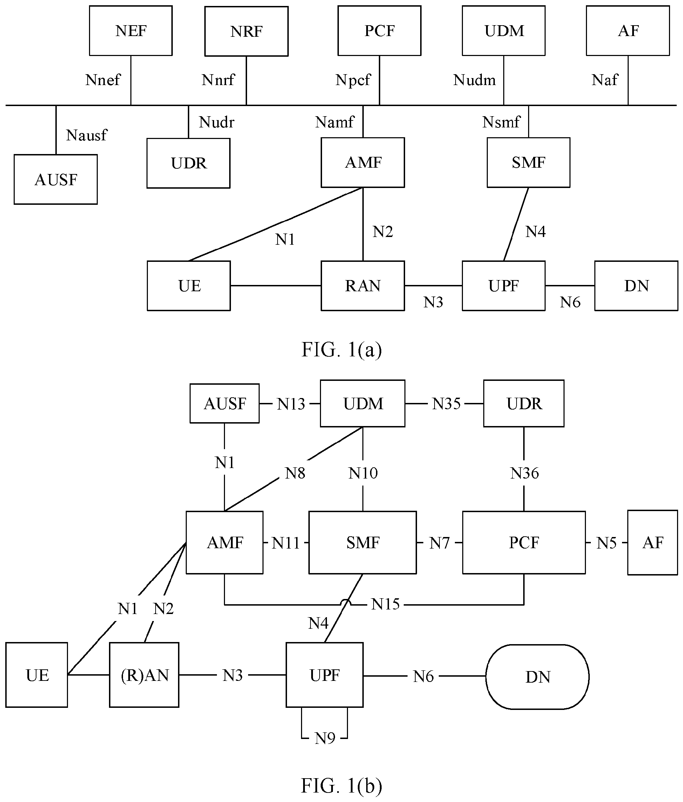

FIG. 1(a) is a schematic diagram of a 5th generation (5th generation, 5G) network architecture that is based on a service-oriented architecture. The 5G network architecture shown in FIG. 1(a) may include three parts: a terminal device part, a data network (data network, DN) part, and a carrier network part. The following briefly describes functions of some of the network elements.

The carrier network may include one or more of the following network elements: an authentication server function (Authentication Server Function, AUSF) network element, a network exposure function (network exposure function, NEF) network element, a policy control function (policy control function, PCF) network element, a unified data management (unified data management, UDM) network element, a unified data repository (Unified Data Repository, UDR) network element, a network repository function (Network Repository Function, NRF) network element, an application function (application function, AF) network element, an access and mobility management function (access and mobility management function, AMF) network element, a session management function (session management function, SMF) network element, a radio access network (radio access network, RAN), a user plane function (user plane function, UPF) network element, and the like. In the foregoing carrier network, a part other than the radio access network may be referred to as a core network.

A terminal device (terminal device) is a device having a wireless transceiver function. The terminal device may be deployed on land, including an indoor device, an outdoor device, a handheld device, or a vehicle-mounted device; may be deployed on water (for example, on a ship); or may be deployed in the air (for example, on a plane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), user equipment (user equipment, UE), or the like.

The terminal device may establish a connection to the carrier network through an interface (for example, N1) provided by the carrier network, and use services such as data and/or voice provided by the carrier network. The terminal device may further access a DN through the carrier network, and use a carrier service deployed on the DN and/or a service provided by a third party. The third party may be a service provider other than the carrier network and the terminal device, and may provide other services such as a data service and/or a voice service for the terminal device. A specific representation form of the third party may be specifically determined based on an actual application scenario, and is not limited herein.

The RAN is a subnet of the carrier network, and is an implementation system between a service node in the carrier network and the terminal device. To access the carrier network, the terminal device first passes through the RAN, and may be connected to the service node in the carrier network through the RAN. A RAN device is a device that provides a wireless communication function for the terminal device, and the RAN device is also referred to as an access network device. The RAN device includes but is not limited to: a next generation NodeB (g nodeB, gNB), an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, a home evolved nodeB or a home node B, HNB), a baseband unit (baseBand unit, BBU), a transmission reception point (transmitting and receiving point, TRP), a transmission point (transmitting point, TP), a mobile switching center, and the like in 5G.

The AMF network element mainly performs functions such as mobility management and access authentication/authorization. In addition, the AMF network element is responsible for transferring a user policy between the UE and the PCF.

The SMF network element mainly performs functions such as session management, execution of a control policy delivered by the PCF, UPF selection, and UE internet protocol (internet protocol, IP) address assignment.

The UPF network element serves as an interface connecting to the data network, and implements functions such as user plane data forwarding, charging statistics based on a session/flow level, and bandwidth throttling.

The UDM network element is mainly responsible for functions such as subscription data management and user access authorization.

The UDR is mainly responsible for a function of accessing subscription data, policy data, application data, and another type of data.

The NEF is mainly configured to support capability and event exposure.

The AF network element mainly transfers a requirement of an application side on a network side, for example, a quality of service (Quality of Service, QoS) requirement or user status event subscription. The AF may be a third-party functional entity, or may be an operator-deployed application service, for example, an IP multimedia subsystem (IP Multimedia Subsystem, IMS) voice call service.

The PCF network element is mainly responsible for policy control functions such as charging for a session level or a service flow level, QoS bandwidth guarantee, mobility management, and UE policy decision. In this architecture, PCFs connected to the AMF and the SMF are separately an AM PCF (PCF for Access and Mobility Control) and an SM PCF (PCF for Session Management). In an actual deployment scenario, the PCFs may not be a same PCF entity.

The NRF network element may be configured to provide a network element discovery function, and provide, based on a request from another network element, network element information corresponding to a network element type. The NRF further provides a network element management service, for example, registration, update, and deregistration of a network element and subscription and push of a network element status.

The AUSF network element is mainly responsible for authenticating a user, to determine whether the user or a device is allowed to access a network.

ADN is a network outside a carrier network. The carrier network may access a plurality of DNs. A plurality of services may be deployed in the DN, and the DN may provide services such as a data service and/or a voice service for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

Nausf, Nnef, Npcf, Nudm, Naf, Namf, Nsmf, N1, N2, N3, N4, and N6 in FIG. 1(a) are interface serial numbers. For meanings of these interface sequence numbers, refer to meanings defined in the 3rd generation partnership project (3rd generation partnership project, 3GPP) standard protocol. This is not limited herein.

FIG 1(b) is a schematic diagram of a 5G network architecture based on a point-to-point interface. For descriptions of functions of network elements in FIG. 1(b), refer to descriptions of functions of corresponding network elements in FIG. 1(a). Details are not described again. A main difference between FIG. 1(b) and FIG. 1(a) lies in that interfaces between network elements in FIG. 1(b) are point-to-point interfaces, and interfaces between network elements in FIG. 1(a) are service-based interfaces.

In the architecture shown in FIG. 1(b), names and functions of the interfaces between the network elements are as follows:
(1) N7 represents an interface between the PCF and the SMF, and may be configured to deliver a protocol data unit (protocol data unit, PDU) session granularity control policy and a service data flow granularity control policy.
(2) N15 represents an interface between the PCF and the AMF, and may be configured to deliver a UE policy and an access control related policy.
(3) N5 represents an interface between the AF and the PCF, and may be configured to deliver an application service request and report a network event.
(4) N4 represents an interface between the SMF and the UPF, and is configured to transfer information between a control plane and a user plane, including delivery of forwarding rules, QoS control rules, traffic statistics rules, and the like from the control plane to the user plane, and reporting of user plane information.
(5) N11 represents an interface between the SMF and the AMF, and may be configured to: transfer PDU session tunnel information between the RAN and the UPF, transfer a control message to be sent to the UE, transfer radio resource control information to be sent to the RAN, and the like.
(6) N2 represents an interface between the AMF and the RAN, and may be configured to transfer radio bearer control information and the like from a core network side to the RAN.
(7) N1 represents an interface between the AMF and the UE, and may be configured to transfer the QoS control rules and the like to the UE.
(8) N8 represents an interface between the AMF and the UDM, and may be used by the AMF to obtain, from the UDM, subscription data and authentication data related to access and mobility management, and used by the AMF to register current mobility management related information of the UE with the UDM.
(9) N10 represents an interface between the SMF and the UDM, and may be used by the SMF to obtain, from the UDM, subscription data related to session management, and used by the SMF to register current session related information of the UE with the UDM.
(10) N35 represents an interface between the UDM and the UDR, and may be used by the UDM to obtain user subscription data information from the UDR.
(11) N36 represents an interface between the PCF and the UDR, and may be used by the PCF to obtain policy related subscription data and application data related information from the UDR.
(12) N12 represents an interface between the AMF and the AUSF, and may be used by the AMF to initiate an authentication process to the AUSF, where an SUCI may be carried as a subscription identifier.
(13) N13 represents an interface between the UDM and the AUSF, and may be used by the AUSF to obtain a user authentication vector from the UDM, to perform an authentication process.

It may be understood that the foregoing network elements or functions may be network elements in a hardware device, software functions running on dedicated hardware, or virtualized functions instantiated on a platform (for example, a cloud platform). Optionally, the foregoing network elements or the functions may be implemented by one device, may be implemented by a plurality of devices, or may be one function module in one device. This is not specifically limited in embodiments of this application.

A mobility management network element, a session management network element, a policy control network element, an access network device, and a user plane network element in this application may be respectively the AMF, the SMF, the PCF, the RAN, and the UPF in FIG. 1(a) or FIG. 1(b), or may be network elements that have functions of the AMF, the SMF, the PCF, the RAN, and the UPF in a future communication network such as a 6th generation (6th generation, 6G) network. This is not limited in this application. For ease of description, in this application, an example in which the mobility management network element, the session management network element, the policy control network element, the access network device, and the user plane network element are respectively the AMF, the SMF, the PCF, the RAN, and the UPF is used for description. Further, in this application, an example in which the terminal device is the UE is used for description.

In the 5G era, hundreds of billions of internet of things devices access a network, different types of application scenarios have different requirements on the network, and requirements of some of the scenarios may even conflict. If a single network is used to provide services for different types of application scenarios, a network architecture is extremely complex, and network management efficiency and resource utilization are low. In a 5G network slicing technology, independent logical networks are virtualized on a same network infrastructure, to provide network environments isolated from each other for different application scenarios, so that network functions and features can be customized for the different application scenarios based on respective requirements, and QoS requirements of different services can be effectively ensured. An objective of 5G network slicing is to organically combine terminal devices, access network resources, core network resources, and network O&M and management systems to provide a complete network that can be independently maintained and isolated for different business scenarios or service types.

Various scenarios pose different requirements on the 3GPP ecosystem, such as charging, policy, security, and mobility. The 3GPP emphasizes that network slices do not affect each other. For example, a large quantity of burst meter reading services should not affect normal mobile broadband services. To meet diversified requirements and slice isolation, independent management and operation and maintenance are required for services, and customized service functions and analysis capabilities are provided. Instances of different service types are deployed on different network slices, and instances of a same service type may also be deployed on different network slices.

When the network slice is deployed in a core network, if a user initially attaches to the network, a network slice selection process is triggered. The network slice selection process depends on subscription data of the user, local configuration information, a roaming protocol, an operator policy, and the like. In the network slice selection process, the foregoing parameters need to be comprehensively considered to select an optimal slice type for UE.

In embodiments of this application, an identifier of a network slice includes single network slice selection assistance information (single network slice selection assistance information, S-NSSAI) and network slice selection assistance information (network slice selection assistance information, NSSAI).

The S-NSSAI is used to identify a network slice, and the S-NSSAI is formed by a slice/service type (Slice/Service type, SST) and a slice differentiator (Slice Differentiator, SD).
- SST is used to describe characteristics and services of the slice.
- SD is optional information, and is used to distinguish between different network slices having a same SST characteristic.

The NSSAI is used to identify a plurality of network slices, that is, the NSSAI is a set of pieces of S-NSSAI. The NSSAI on a 5G network can be configured NSSAI (Configured NSSAI), requested NSSAI (Requested NSSAI), or allowed NSSAI (Allowed NSSAI).

In embodiments of this application, the network slice may also be referred to as a slice. The network slice and the slice have a same meaning. Details are not described subsequently.

When the UE is in a connected state, a handover procedure is triggered as the UE moves.

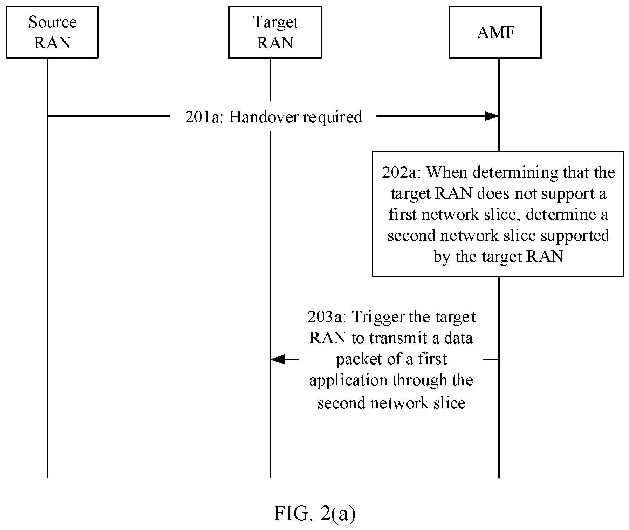

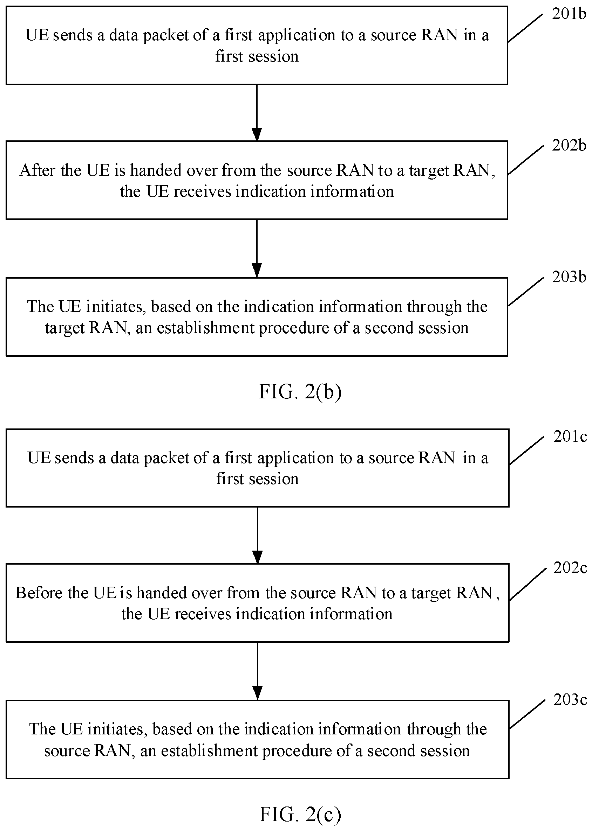

If there is an Xn interface between a source RAN and a target RAN to which the UE is to be handed over, the UE is handed over from the source RAN to the target RAN through a handover procedure of the Xn interface. FIG. 2 is a schematic diagram of an Xn-based handover procedure, including the following steps.

Step 1: When the UE is in the connected state, the UE performs related measurement based on a measurement configuration message delivered by the source RAN, and the UE sends a measurement report to the source RAN. The measurement report includes an information list of candidate RANs to be handed over to a target side (a list of candidate Target IDs), and a result of a measurement indicator between each candidate RAN and the UE. The measurement indicator includes a received signal strength indication (received signal strength indication, RSSI), reference signal received power (reference signal receiving power, RSRP), or reference signal received quality (reference signal receiving quality, RSRQ) that is obtained by the UE.

Step 2: The source RAN selects one of a plurality of candidate RANs as a target RAN based on the result of the measurement indicator reported by the UE. Further, the source RAN determines that there is an Xn interface between the source RAN and the target RAN, and triggers an Xn-based handover procedure. The source RAN sends a handover request (handover request) message to the target RAN, where the handover request message carries a target cell ID and PDU session information corresponding to a PDU session (Session) currently established by the UE. The PDU session information includes slice information corresponding to the PDU session and QoS configuration profile (QoS profile(s) information corresponding to the PDU session.

Step 3: The target RAN performs admission control (Admission Control). If the source RAN sends the slice information corresponding to the PDU session to the target RAN, the target RAN needs to determine whether a slice corresponding to the PDU session is supported. Examples are as follow:
(a) If a slice corresponding to the PDU session currently established by the UE is not supported in a target tracking area identity (tracking area identity, TAI) (where a TAI in which the target RAN is located is referred to as the target TAI) (for example, the UE moves out of a service area of the slice corresponding to the PDU session currently established by the UE, and the slice corresponding to the PDU session currently established by the UE is not deployed in the target TAI), the PDU session currently established by the UE cannot maintain session continuity on the target side, and the target RAN rejects the PDU session to be switched to the target side.
(b) If the slice corresponding to the PDU session currently established by the UE is supported in a target TAI (for example, the UE does not move out of a service area of the slice corresponding to the PDU session currently established by the UE, and the slice corresponding to the PDU session currently established by the UE is deployed in the target TAI), the PDU session currently established by the UE can still be used on the target side. This indicates that a resource of the PDU session currently established by the UE on a core network side can be ensured. Therefore, the target RAN allows the PDU session to be switched to the target side.

Step 4: The target RAN sends a HANDOVER REQUEST ACKNOWLEDGE message to the source RAN, where the message includes a list of PDU sessions that are allowed to be switched to the target side and a list of PDU sessions that are not allowed to be switched to the target side.

Step 5: The source RAN triggers the UE to perform a handover procedure.

Step 6: The target RAN sends an N2 message to an AMF, where the N2 message may be a PATH SWITCH REQUEST message, and carries the list of PDU sessions that are allowed to be switched to the target side (List of PDU Sessions To Be Switched), the list of PDU sessions that are not allowed to be switched to the target side (List of PDU Sessions that failed to be established), and current location information of the UE.

After receiving the PATH SWITCH REQUEST message, the AMF triggers a core network to switch a downlink data path to the target RAN.

Step 7: The AMF sends a PATH SWITCH REQUEST ACK message to the target RAN, where the path switch request ACK message carries N2 SM information, information about PDU sessions that fails to be switched (Failed PDU Sessions), and a set of slices that the UE is allowed to access on the target side (Allowed NSSAI).

If an Xn-based handover cannot be performed between the source RAN and the target RAN to which the UE is to be handed over, the UE is handed over to the target side through an NG-based handover (or referred to as an N2-based handover) procedure. The NG-based handover procedure includes a preparation phase and an execution phase. A procedure of the handover preparation phase includes the following steps.

Step 1: The source RAN sends handover required (Handover Required) to a source AMF, where handover required carries a target ID, a source to target transparent container, an SM N2 info list, PDU session IDs, and intra system handover indication information. Details are as follow:
The target ID includes a selected public land mobile network (public land mobile network, PLMN) ID.

The source to target transparent container is information that needs to be transmitted to the target RAN, including user plane security enhancement information of the PDU, a QoS flow, and a data radio bearer (data radio bearer, DRB).

The SM N2 info list contains direct forwarding path availability information.

The PDU session IDs indicate identifiers of PDU sessions to be switched to the target side.

Step 2: A target AMF is selected. If the source AMF cannot continue to serve the UE, the target AMF needs to be selected. If the source AMF can continue to serve the UE, this step is not required.

Step 3: The source AMF invokes a service-oriented operation Namf_Communication_CreateUEContext request of the target AMF, and sends UE context information to the target AMF through the request. If the source AMF can continue to serve the UE, this step is not required.

Step 4: The target AMF invokes a service-oriented operation Nsmf_PDUSession_UpdateSMContext of an SMF, where the service-oriented operation carries the PDU session ID, the target ID, a target AMF ID, and N2 SM information. For each PDU session to be switched to the target side, the AMF sends the message to an SMF associated with each PDU session. However, if S-NSSAI associated with the PDU session to be handed over to the target side is unavailable on the target side, the AMF does not initiate this request.

Step 5: The SMF detects whether each PDU session can be handed over to the target side, and if the UE moves out of a service area of a UPF connected to a RAN, the SMF needs to select a new intermediate UPF (intermediate UPF, I-UPF).

Step 6: The SMF sends an N4 session modification request to a PDU session anchor (PDU session anchor, PSA) UPF, and receives an N4 session modification response from the PSA UPF. Then, the SMF sends an N4 session modification request to the I-UPF and receives an N4 session modification response from the I-UPF.

Step 7: The SMF invokes a service-oriented operation Nsmf_PDUSession_UpdateSMContext response of the SMF, where the service-oriented operation carries the PDU session ID and the N2 SM information. The AMF receives an Nsmf_PDUSession_UpdateSMContext response message from the SMF.

Step 8: The target AMF sends a handover request to the target RAN, where the handover request carries a source to target transparent container, N2 MM information and an N2 SM information list.

Step 9: The target RAN sends handover request acknowledge to the target AMF.

Step 10: The target AMF invokes a service-oriented operation Nsmf_PDUSession_UpdateSMContext request of the SMF, to trigger the SMF to initiate an N4 session modification procedure.

Step 11: The target AMF invokes a Namf_Communication_CreateUEContext response of the source AMF, where the response carries a PDU sessions failed to be setup list, to notify the source AMF of PDU sessions that cannot be handed over to the target side.

It can be learned from the Xn-based handover procedure or the NG-based handover procedure that, when the UE moves out of coverage of a slice, and the target RAN does not support a slice associated with a session (for example, a PDU session) currently established by the UE, the target RAN rejects the PDU session to be handed over to the target RAN. Consequently, session continuity of the session cannot be maintained on the target side, and service experience of the UE is affected. For example, if the UE moves out of coverage of a slice 1, but the target RAN does not support the slice 1 associated with a session currently established by the UE, the target RAN rejects the session to be handed over to the target RAN.

Therefore, in a process in which the UE is handed over from the source RAN to the target RAN, how to avoid service interruption is a problem to be resolved in embodiments of this application. Alternatively, it is understood that technical solutions in embodiments of this application are used to ensure the service continuity in the process in which the UE is handed over from the source RAN to the target RAN.

FIG. 2(a) is a schematic diagram of a wireless communication method according to an embodiment of this application. The method is applied to a handover procedure in which UE is handed over from a source RAN to a target RAN.

The UE establishes one or more sessions (such as PDU sessions) on a source side, and each session corresponds to one network slice. For ease of description, the following uses a first session of the UE on the source side as an example for description. The first session corresponds to a first network slice, and the first session is used to transmit a data packet of a first application. It may be understood that the first session is used to transmit the data packet of the first application on a user plane path on the source side, and the user plane path on the source side includes the following nodes: the UE, the source RAN, a UPF, and the like. Context information corresponding to the first session is established on the UE, the source RAN, and the UPF.

When the UE moves, and the UE moves out of coverage of the first network slice, the target RAN does not support the first network slice. Therefore, according to a conventional procedure, the target RAN cannot hand over the first session to a target side. Therefore, an embodiment of this application provides a wireless communication method, to resolve this problem.

The method includes the following steps.

Step 201a: An AMF receives handover required from the source RAN, where handover required includes an identifier of the first session.

The identifier of the first session may be, for example, a PDU session ID.

Optionally, the handover request further carries location information of the target RAN. For example, the location information may be a TAI in which the target RAN is located.

The handover request is used to request to perform a handover on the UE.

Step 202a: When determining that the target RAN does not support the first network slice, the AMF determines a second network slice supported by the target RAN.

The AMF obtains the identifier of the first session in the handover request, and determines that the first session corresponds to the first network slice. Further, the AMF determines whether the target RAN supports the first network slice. When determining that the target RAN does not support the first network slice, the AMF selects a network slice (which is referred to as the second network slice) from network slices supported by the target RAN. Subsequently, the first session is handed over from the first network slice to the second network slice.

It should be noted that, that the target RAN does not support the first network slice may also be understood as that a location (for example, the TAI) of the target RAN does not support the first network slice; and that the target RAN supports the second network slice may also be understood as that the location (for example, the TAI) of the target RAN supports the second network slice.

It should be noted that handing over the first session from the first network slice to the second network slice may also be referred to as mapping the first session from the first network slice to the second network slice. It may be understood that, to ensure a service continuity requirement, a service transmitted through one network slice is transmitted through another network slice. Alternatively, it may be referred to as that there is a mapping relationship between the first network slice and the second network slice. The second network slice herein may also be referred to as a remapping slice.

Handing over the first session from the first network slice to the second network slice is to change a correspondence between the first session and the first network slice to a correspondence between the first session and the second network slice. Alternatively, it is understood that, that the data packet is transmitted through a resource of the first network slice in the first session is changed to that the data packet is transmitted through a resource of the second network slice in the first session. It should be noted that, that the data packet is transmitted through the resource of the second network slice in the first session herein may be that, for example, before the handover is completed, a second session may be newly established on the source side, the data packet is transmitted through the resource of the second network slice in the newly established second session, and the second session is subsequently switched to the target RAN. For another example, a second session may be established on the target side after the handover is completed, and the data packet is transmitted through the resource of the second network slice in the newly established second session. Data packets transmitted in the first session and the second session are from a same application.

For example, when the target RAN does not support the first network slice, a reason why the AMF further needs to select the second network slice may be any one of the following.

Condition 1: If the AMF determines that the first session has a service continuity requirement, the AMF determines to select the second network slice. In an implementation, the service continuity requirement of the session may be represented through a session and service continuity mode (Session and Service Continuity mode, SSC mode).

Condition 2: If the AMF determines that a DN corresponding to the first session has a service continuity requirement, the AMF determines to select the second network slice.

The second network slice determined by the AMF may be a network slice identified by S-NSSAI of allowed NSSAI (Allowed NSSAI) of the UE. In other words, the UE is allowed to access the second network slice.

For example, the second network slice selected by the AMF meets any one of the following conditions.

Condition 1: An identifier of the second network slice belongs to the allowed NSSAI, and the target RAN supports the second network slice.

Condition 2: An identifier of the second network slice belongs to the allowed NSSAI, the target RAN supports the second network slice, and the first network slice corresponding to the first session and the second network slice can access a same data network.

Condition 3: An identifier of the second network slice belongs to the allowed NSSAI, the target RAN supports the second network slice, and an SMF and/or a UPF corresponding to the first session support/supports both the first network slice corresponding to the first session and the second network slice.

Step 203a: The AMF triggers the target RAN to transmit the data packet of the first application through the second network slice.

It may be understood that, that the UE transmits the data packet of the first application through the first network slice is switched to that the UE transmits the data packet of the first application through the second network slice.

Based on the solution, after a terminal device moves out of coverage of the first network slice, when the target access network device does not support the first network slice corresponding to the first session, the mobility management network element selects the second network slice supported by the target access network device, so that the target access network device transmits, through the second network slice, the data packet of the first application that is originally transmitted in the first session. Therefore, service continuity is ensured in a procedure in which the terminal device is handed over from the source access network device to the target access network device, thereby improving user experience.

For example, the following provides three different implementation methods of step 203a.

Method 1: The AMF sends the identifier of the second network slice to the SMF, and the SMF generates first information (where the first information may be, for example, N2 SM information) based on the identifier of the second network slice, where the first information includes the identifier of the second network slice. Then, the SMF sends the first information to the AMF. After receiving the first information, the AMF sends the first information to the target RAN. The first information is used to trigger the target RAN to transmit the data packet of the first application through the second network slice. In other words, after receiving the first information, the target RAN transmits the data packet of the first application through the second network slice based on the identifier of the second network slice carried in the first information.

The SMF is an SMF corresponding to the first session. That the target RAN transmits the data packet of the first application through the second network slice means that the resource corresponding to the second network slice is established on the target RAN, and the target RAN transmits the data packet of the first application through the resource corresponding to the second network slice.

In the method, the SMF triggers, through the generated first information, the target RAN to transmit the data packet of the first application through the second network slice.

Method 2: The AMF sends the identifier of the second network slice and first indication information to the target RAN, where the first indication information indicates the target RAN to transmit the data packet of the first application through the second network slice.

In the method, the AMF sends the first indication information and the identifier of the second network slice to the target RAN, to trigger the target RAN to transmit the data packet of the first application through the second network slice.

Method 3: The SMF generates second information (for example, may be N2 SM information), where the second information carries an identifier of the first network slice, and then sends the second information to the AMF. After receiving the second information, the AMF replaces the identifier of the first network slice in the second information with the identifier of the second network slice, to obtain third information (for example, may be N2 SM information). Then, the AMF sends the third information to the target RAN, where the third information is used to trigger the target RAN to transmit the data packet of the first application through the second network slice. In other words, after receiving the third information, the target RAN transmits the data packet of the first application through the second network slice based on the identifier of the second network slice carried in the third information.

It should be noted that, the N2 SM information is used as an example for description. The N2 SM information sent by the SMF to the AMF and the N2 SM information sent by the AMF to the target RAN include different parameters.

In the method, the AMF triggers, through the generated third information, the target RAN to transmit the data packet of the first application through the second network slice.

Optionally, after step 202a, the AMF may further trigger the UE to establish, in the target RAN, a second session corresponding to the second network slice. Subsequently, the UE and the target RAN may transmit the data packet of the first application in the second session.

In an implementation method, after the handover is completed, the UE may be triggered to establish the second session. For a specific implementation method, refer to descriptions of an embodiment corresponding to FIG. 2(b).

In another implementation method, the UE may be triggered to establish the second session in a handover process. For a specific implementation method, refer to descriptions of an embodiment corresponding to FIG. 2(c).

FIG. 2(b) is a schematic diagram of a wireless communication method according to an embodiment of this application. In the method, after the UE is handed over from the source RAN to the target RAN, the UE is triggered to establish the second session corresponding to the second network slice. The method includes the following steps.

Step 201b: The UE sends the data packet of the first application to the source RAN in the first session, where the first session corresponds to the first network slice.

In other words, before the handover is completed, the UE sends the data packet of the first application to the source RAN in the first session.

That the UE sends the data packet of the first application to the source RAN in the first session means that the UE sends the data packet of the first application to the source RAN through a user plane resource of the first session, where the context information of the first session is established on both the UE and the source RAN.

Step 202b: After the UE is handed over from the source RAN to the target RAN, the UE receives indication information.

Step 203b: The UE initiates, based on the indication information through the target RAN, an establishment procedure of the second session, where the second session corresponds to the second network slice, and the second session is used to transmit the data packet of the first application. That the second session is used to transmit the data packet of the first application means that a user plane resource of the second session is used to transmit the data packet of the first application.

Based on the solution, after the terminal device is handed over from the source access network device to the target access network device, the terminal device may initiate, based on the received indication information through the target access network device, the establishment procedure of the second session. Subsequently, the terminal device and the target access network device may transmit, in the second session, the data packet of the first application that is originally transmitted in the first session. Therefore, service continuity is ensured in a procedure in which the terminal device is handed over from the source access network device to the target access network device, thereby improving user experience. It may also be understood that the UE sends the data packet of the first application to the target access network device through the user plane resource of the second session.

In an implementation method, the indication information in step 202b is from the AMF. For example, the AMF sends the indication information (which is also referred to as second indication information in this embodiment of this application) to the UE, and sends, to the UE, an identifier of a network slice allowed to be accessed (Allowed NSSAI). The network slice allowed to be accessed includes the first network slice and the second network slice, and the indication information indicates that the target RAN does not support the first network slice but supports the second network slice. After receiving the indication information, the UE performs step 203b. It may be understood that the indication information triggers the UE to initiate the establishment procedure of the second session.

In another implementation method, the indication information in step 202b is from the SMF. For example, the SMF sends the indication information and the identifier of the second network slice to the UE, where the indication information is used to trigger the UE to initiate, based on the second network slice, the establishment procedure of the second session. After receiving the indication information, the UE performs step 203b.

In an implementation method, the UE or the AMF further releases the first session. For example, after the UE initiates the establishment procedure of the second session through the target RAN and successfully establishes the second session, the UE releases, based on the indication information, the first session. For another example, the AMF starts a timer after sending the indication information in step 202b to the UE. After the timer expires, the AMF triggers release of the first session. The triggering release of the first session herein may be that the AMF releases the first session, or the AMF sends, to the UE, information that indicates the UE to release the first session, and the UE releases, based on the information that indicates the UE to release the first session, the first session. On one hand, releasing the first session can ensure that the data packet of the first application is transmitted by the target access network device through the second network slice. On another hand, because the first session cannot continue to be used to transmit the data packet of the first application on the target side, releasing the first session can reduce resource overheads.

FIG. 2(c) is a schematic diagram of a wireless communication method according to an embodiment of this application. In the method, in a process in which the UE is handed over from the source RAN to the target RAN, the UE is triggered to establish the second session corresponding to the second network slice. The method includes the following steps.

Step 201c: The UE sends the data packet of the first application to the source RAN in the first session, where the first session corresponds to the first network slice.

In other words, before the handover is completed, the UE sends the data packet of the first application to the source RAN in the first session.

That the UE sends the data packet of the first application to the source RAN in the first session means that the UE sends the data packet of the first application to the source RAN through a user plane resource of the first session, where the context information of the first session is established on both the UE and the source RAN.

Step 202c: Before the UE is handed over from the source RAN to the target RAN, the UE receives indication information.

Step 203c: The UE initiates, based on the indication information through the source RAN, an establishment procedure of the second session, where the second session corresponds to the second network slice, and the second session is used to transmit the data packet of the first application in the target RAN. That the second session is used to transmit the data packet of the first application in the target RAN means that a user plane resource of the second session is used to send the data packet of the first application through the target RAN, and context information of the second session is established in the target RAN.

Based on the solution, before the terminal device is handed over from the source access network device to the target access network device, the terminal device may initiate, based on the received indication information through the source access network device, the establishment procedure of the second session. The terminal device and the source access network device may transmit, based on the second session, the data packet of the first application that is originally transmitted in the first session. In addition, after the terminal device is handed over from the source access network device to the target access network device, the terminal device and the target access network device may transmit, in the second session, the data packet of the first application that is originally transmitted in the first session. Therefore, service continuity is ensured in a procedure in which the terminal device is handed over from the source access network device to the target access network device, thereby improving user experience.

In an implementation method, the indication information in step 202c is from the AMF. For example, the AMF sends the indication information (which is also referred to as third indication information in this embodiment of this application) to the UE, and the indication information is used to trigger the UE to initiate the establishment procedure of the second session through the source RAN. After receiving the indication information, the UE performs step 203c. Optionally, the AMF may further send a handover preparation failure message to the source RAN. The handover preparation failure message includes fifth indication information, and the fifth indication information indicates the source RAN to re-initiate an NG-based handover procedure.

In another implementation method, the indication information in step 202c is from the SMF. For example, the AMF sends fourth indication information to the SMF, where the fourth indication information indicates the SMF to trigger the UE to initiate the establishment procedure of the second session through the source RAN. Then, the SMF sends the indication information in step 202c to the UE based on the fourth indication information, to trigger the UE to initiate the establishment procedure of the second session through the source RAN. After receiving the indication information, the UE performs step 203c. Optionally, the AMF may further send a handover preparation failure message to the source RAN. The handover preparation failure message includes fifth indication information, and the fifth indication information indicates the source RAN to re-initiate an NG-based handover procedure.

In an implementation method, the UE further releases the first session. For example, after the UE initiates the establishment procedure of the second session through the target RAN and successfully establishes the second session, the UE releases, based on the indication information, the first session. For another example, the AMF starts a timer after sending the indication information in step 202c to the UE. After the timer expires, the AMF triggers release of the first session. The triggering release of the first session herein may be that the AMF releases the first session, or the AMF sends, to the UE, information that indicates the UE to release the first session, and the UE releases, based on the information that indicates the UE to release the first session, the first session. On one hand, releasing the first session can ensure that the data packet of the first application is transmitted by the target access network device through the second network slice. On another hand, because the first session cannot continue to be used to transmit the data packet of the first application on the target side, releasing the first session can reduce resource overheads.

The following describes the solution with reference to specific examples. It should be noted that a network slice 1 and a network slice 2 in the following examples are respectively specific examples of the first network slice and the second network slice in the solution. In the following examples, a session to be switched to a target side is a specific example of the first session in the solution, and a switched session (namely, a new PDU session) is a specific example of the second session in the solution. The session to be handed over to the target side is used by UE to transmit a data packet of a first application on a source side, and the session to be handed over to the target side corresponds to the network slice 1. The switched session is used by the UE to transmit the data packet of the first application on the target side, and the switched session corresponds to the network slice 2.

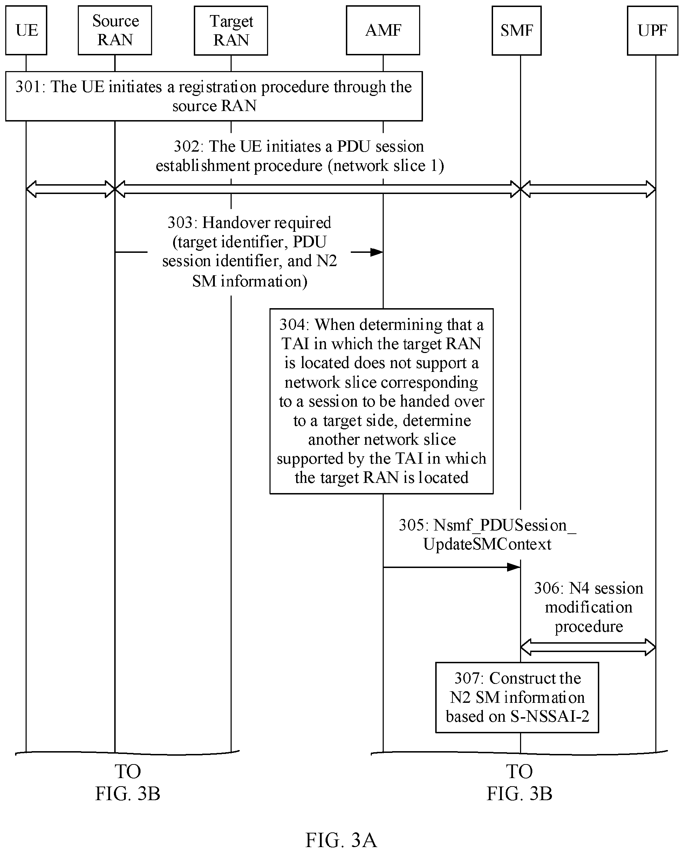

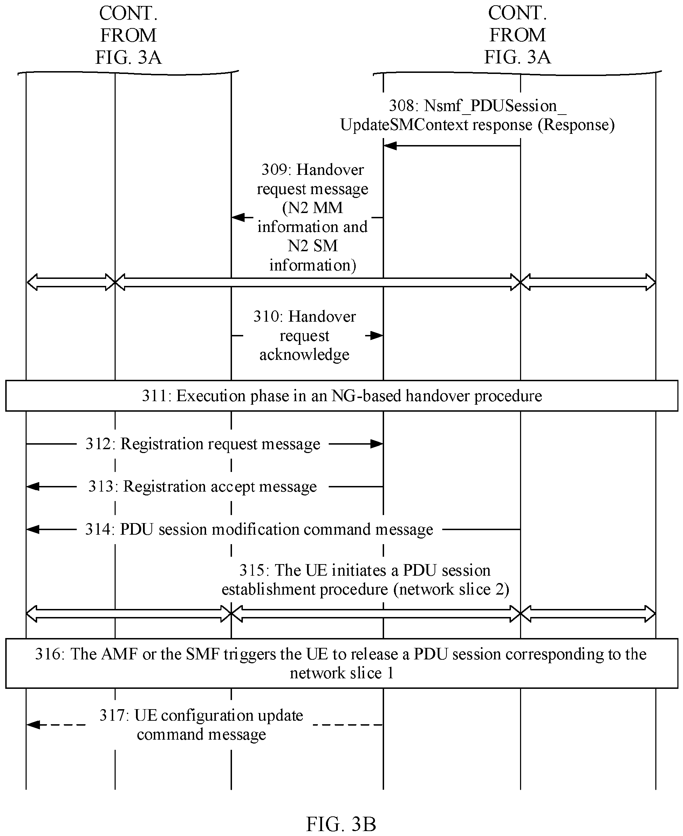

FIG. 3A and FIG. 3B are a schematic diagram of a wireless communication method according to an embodiment of this application. In the method, if a source RAN initiates an NG-based handover, and a core network side determines that a target RAN does not support a slice (namely, a first network slice) corresponding to an ongoing PDU session, the core network side indicates, according to a slice mapping rule or based on policy information, an SMF to construct an N2 SM message based on a remapping slice (remapping slice) (namely, a second network slice). The N2 SM message indicates the target RAN to perform an NG-based handover based on the remapping slice. After the NG-based handover is completed, the SMF indicates UE to re-establish a new session corresponding to the remapping slice. A meaning of slice mapping is that, to ensure a service continuity requirement, a service transmitted through one network slice is transmitted through another network slice.

The method includes the following steps.

Step 301: The UE initiates a registration procedure through the source RAN.

For detailed steps of the registration procedure, refer to a conventional procedure.

Through the registration procedure, an AMF determines an identifier of a network slice that the UE is allowed to access, and the identifier is indicated by allowed NSSAI. Then, the AMF sends the allowed NSSAI to the UE, where the allowed NSSAI includes one or more pieces of S-NSSAI, and each piece of S-NSSAI identifies a network slice that the UE is allowed to access.

Example 1: The allowed NSSAI includes S-NSSAI-1 and S-NSSAI-2, where S-NSSAI-1 is an identifier of a network slice 1, and S-NSSAI-2 is an identifier of a network slice 2.

Example 2: The allowed NSSAI includes S-NSSAI-1, S-NSSAI-2, and S-NSSAI-3, where S-NSSAI-1 is an identifier of a network slice 1, S-NSSAI-2 is an identifier of a network slice 2, and S-NSSAI-3 is an identifier of a network slice 3.

Step 302: The UE initiates a PDU session establishment procedure.

Specifically, in the PDU session establishment procedure initiated by the UE, parameters such as a PDU session identifier (PDU session ID), the S-NSSAI, and a data network name (Data Network Name, DNN) are carried and sent to the AMF.

The AMF selects the SMF based on the S-NSSAI, a network slice instance associated with the S-NSSAI, and the DNN. For detailed steps of the procedure, refer to a conventional session establishment procedure. For ease of description, in this embodiment, a network slice associated with a current PDU session is referred to as a network slice 1 (that is, the network slice corresponding to the current PDU session is the network slice 1, and an identifier of the network slice 1 is S-NSSAI-1). The identifier of the network slice 1 is included in the allowed NSSAI.

A quantity of PDU sessions initiated by the UE is not limited in this embodiment. For ease of description, an example in which the UE establishes one PDU session is used for description. It should be noted that, when a plurality of PDU sessions are established, each PDU session corresponds to one network slice, and network slices corresponding to different PDU sessions may be the same or different. This is not limited in this application.

Step 303: At a moment, the UE moves, the source RAN triggers an NG-based handover procedure, and the source RAN sends a handover required (handover required) message to the AMF, where the message carries a target identifier (Target ID), a PDU session ID corresponding to a session to be handed over to a target side, and N2 SM information.

The target ID includes a TAI in which the target RAN is located.

Step 304: When the AMF determines, based on the TAI in which the target RAN is located and that is included in the target ID and the PDU session ID corresponding to the session to be handed over to the target side, that the TAI in which the target RAN is located does not support a network slice corresponding to the session to be handed over to the target side, the AMF determines another network slice supported by the TAI in which the target RAN is located.

For example, the AMF determines, based on the PDU session ID corresponding to the session to be handed over to the target side, an identifier (namely, S-NSSAI-1) of a network slice corresponding to the session, and then the AMF determines whether the TAI in which the target RAN is located supports the network slice (namely, the network slice 1).

If the TAI in which the target RAN is located does not support the network slice 1, the AMF further determines whether the PDU session is allowed to be mapped from the network slice 1 to another network slice. For a meaning of mapping the PDU session from the network slice 1 to another network slice, refer to the foregoing descriptions.

The AMF may perform determining based on one or more of the following methods.

Method 1: When the AMF determines that the PDU session has a service continuity requirement, the AMF maps another piece of S-NSSAI included in the allowed NSSAI of the UE (for example, the allowed NSSAI further includes S-NSSAI-2, namely, the identifier of the network slice 2) to the S-NSSAI (namely, S-NSSAI-1) corresponding to the current PDU session, and the TAI in which the target RAN is located supports the network slice 2.

Method 2: When the AMF determines that another piece of S-NSSAI included in the allowed NSSAI of the UE (for example, the allowed NSSAI further includes S-NSSAI-2, namely, the identifier of the network slice 2) and the S-NSSAI corresponding to the current PDU session (namely, S-NSSAI-1) can access a same DN, and the TAI in which the target RAN is located supports the network slice 2, the AMF maps S-NSSAI-2 to S-NSSAI-1.

Method 3: When the AMF determines that an SMF and a UPF corresponding to the current PDU session can support another piece of S-NSSAI included in the allowed NSSAI of the UE (for example, the allowed NSSAI further includes S-NSSAI-2, namely, the identifier of the network slice 2), that is, when the SMF and the UPF can support both the network slice 1 and the network slice 2, and the TAI in which the target RAN is located supports the network slice 2, the AMF maps S-NSSAI-2 to S-NSSAI-1.

It should be noted that, for example 2, if the allowed NSSAI in step 301 includes S-NSSAI-1, S-NSSAI-2, and S-NSSAI-3, the AMF may determine, according to the method 1, that the PDU session has a service continuity requirement, and the TAI in which the target RAN is located supports both the network slice 2 and the network slice 3. In this case, the AMF may further select a network slice from the network slice 2 and the network slice 3 with reference to the method 2 or the method 3. For example, with reference to the method 2, a network slice that can access a same DN as a network slice corresponding to the current PDU session is selected from the network slice 2 and the network slice 3. For another example, with reference to the method 3, a network slice that can be supported by an SMF and a UPF corresponding to the current PDU session are selected from the network slice 2 and the network slice 3.

For ease of subsequent description, in this embodiment of this application, a network slice that is mapped to the network slice corresponding to the current PDU session (namely, the network slice 1) is referred to as a network slice 2.

Step 305: The AMF invokes a service-oriented operation Nsmf_PDUSession_UpdateSMContext of the SMF, including a PDU session ID, an identifier of a network slice 2 (namely, S-NSSAI-2), the target ID, N2 SM information, and optionally, a cause value.

There is a mapping relationship between the network slice 2 and the network slice 1, and the cause value indicates the SMF that the target RAN does not support the network slice 1, or indicates the SMF to construct, through S-NSSAI-2, the N2 SM information for triggering the target RAN to perform an NG-based handover. For a meaning of the mapping relationship between the network slice 2 and the network slice 1, refer to the foregoing descriptions.

Step 306: After receiving the parameters from the AMF, the SMF initiates an N4 session modification procedure.

Step 307: The SMF constructs N2 SM information based on S-NSSAI-2.

The N2 SM information includes the PDU session ID and S-NSSAI-2.

The N2 SM information is a specific example of the first information in the foregoing solution.

Step 308: The SMF sends, to the AMF, an Nsmf PDUSession UpdateSMContext response carrying the N2 SM information (the PDU session ID and S-NSSAI-2).

Step 309: The AMF sends a handover request (Handover Request) message to the target RAN, where the message carries N2 MM information and N2 SM information.

The N2 MM information includes security information and a mobility restriction list. The N2 SM information includes the PDU session ID and S-NSSAI-2.

It can be learned from this that the SMF changes, based on indication of the AMF, the network slice corresponding to the PDU session to be switched to the target side from the network slice 1 to the network slice 2, to indicate the target RAN to perform a handover procedure based on the network slice 2, that is, trigger the RAN to transmit the data packet of the first application through the network slice 2.

Step 310: The target RAN returns handover request acknowledge (Handover Request Ack) to the AMF.

Step 311: An execution phase in the NG-based handover procedure. For the procedure, refer to steps in the conventional technology.

Step 312: After the NG-based handover is completed, the UE initiates a registration update procedure. Specifically, the UE sends a registration request (registration request) message to the AMF.

Step 313: The AMF sends a registration accept message to the UE.

Parameters included in the registration accept message are as follows:
Manner 1: The registration accept message includes the allowed NSSAI.

According to the foregoing example 1, the allowed NSSAI includes S-NSSAI-1 and S-NSSAI-2.

Manner 2: The registration accept message includes the allowed NSSAI and rejected NSSAI, and optionally, further includes indication information. The indication information indicates the UE that a service of a network slice corresponding to the rejected NSSAI may be temporarily maintained for a period of time.

According to the foregoing example 1, the allowed NSSAI includes S-NSSAI-2, and the rejected NSSAI includes S-NSSAI-1. The indication information indicates the UE that a service in the network slice 1 corresponding to S-NSSAI-1 may be temporarily maintained for a period of time.

Step 314: The SMF sends a PDU session modification command (PDU session modification command) message to the UE, where the PDU session modification command (PDU session modification command) message carries the PDU session ID and the indication information, the PDU session ID is the identifier of the PDU session corresponding to the network slice 1, and the indication information indicates the UE to initiate an establishment procedure of a new PDU session corresponding to the network slice 2.

It may be understood that the indication information is used to trigger the UE to initiate the establishment procedure of the new PDU session through the target RAN.

Step 315: After receiving the indication information of the SMF, the UE initiates the establishment procedure of the new PDU session corresponding to the network slice 2.

Step 316: The AMF or the SMF triggers the UE to release the PDU session corresponding to the network slice 1.

Step 317: If the allowed NSSAI sent by the AMF to the UE in step 313 includes the identifier of the network slice 1, the AMF further needs to initiate a UE configuration update procedure after the PDU session corresponding to the network slice 1 is released. To be specific, the AMF sends a UE configuration update command (UE Configuration Update Command) message to the UE, where the message carries new allowed NSSAI, and the new allowed NSSAI does not include the identifier of the network slice 1. If the allowed NSSAI sent by the AMF to the UE in step 313 does not include the identifier of the network slice 1, step 317 does not need to be performed.

Based on the foregoing solution, the AMF indicates the SMF to modify a network slice corresponding to an ongoing PDU session to a slice that can be supported by the target RAN, to ensure that the target RAN can smoothly hand over the PDU session. In addition, after the handover is completed, the SMF indicates the UE to establish a new session, where a network slice corresponding to the new session can be supported by the target RAN, to ensure service continuity.

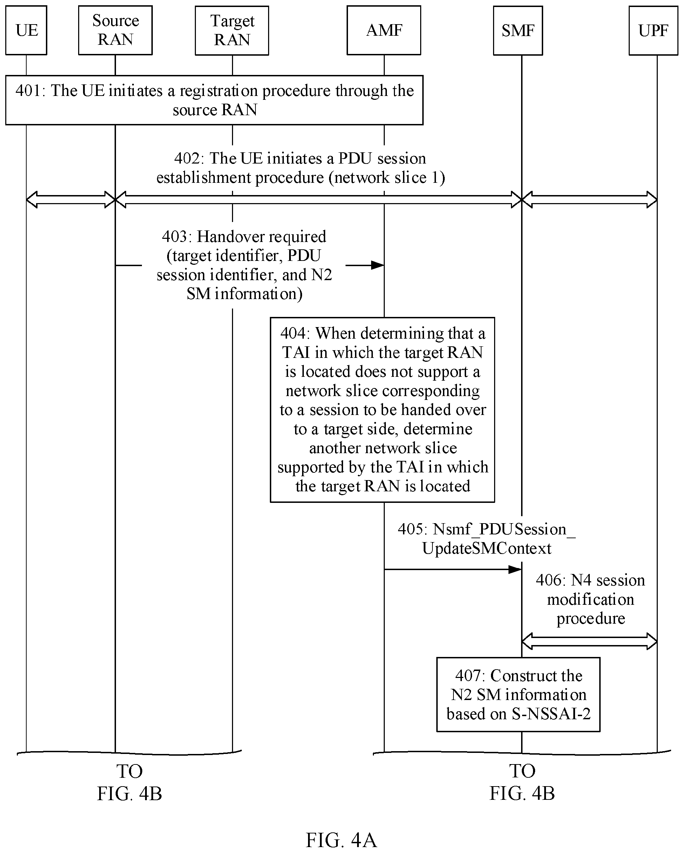

FIG. 4A and FIG. 4B are a schematic diagram of a wireless communication method according to an embodiment of this application. A difference between the method and the method corresponding to FIG. 3A and FIG. 3B lies in that in the method, the AMF triggers the UE to establish a new PDU session, and in the method corresponding to FIG. 3A and FIG. 3B, the SMF triggers the UE to establish a new PDU session.

The method includes the following steps.

Step 401 to step 412 are the same as step 301 to step 312. Refer to the foregoing descriptions.

Step 413: The AMF sends a registration accept message to the UE.

The registration accept message includes the allowed NSSAI and the indication information. For example 1, the allowed NSSAI includes S-NSSAI-1 and S-NSSAI-2. The indication information indicates the UE that the target RAN does not support the network slice 1 corresponding to the S-NSSAI-1 in the allowed NSSAI, but supports the network slice 2 corresponding to S-NSSAI-2.

Step 414: The UE initiates, based on the indication information in the registration accept message, an establishment procedure of a new PDU session corresponding to the network slice 2.

Step 415: After the UE initiates the establishment procedure of the new PDU session corresponding to the network slice 2, the AMF starts a timer.

Step 416: The AMF determines that the timer expires.

Step 417: After the timer expires, the AMF triggers the UE to release the PDU session corresponding to the network slice 1.

For example, the AMF may release the PDU session corresponding to the network slice 1, or the AMF sends, to the UE, information that indicates to release the PDU session corresponding to the network slice 1, so that the UE releases the PDU session corresponding to the network slice 1.

Step 418: The AMF initiates a UE configuration update procedure, and sends a UE Configuration Update Command message to the UE, where the UE Configuration Update Command message carries new allowed NSSAI, and the new allowed NSSAI does not include the identifier of the network slice 1 but includes the identifier of the network slice 2.

Based on the foregoing solution, the AMF indicates the SMF to modify a network slice corresponding to an ongoing PDU session to a slice that can be supported by the target RAN, to ensure that the target RAN can smoothly hand over the PDU session. In addition, after the handover is completed, the AMF indicates the UE to establish a new session, where a network slice corresponding to the new session can be supported by the target RAN, to ensure service continuity.

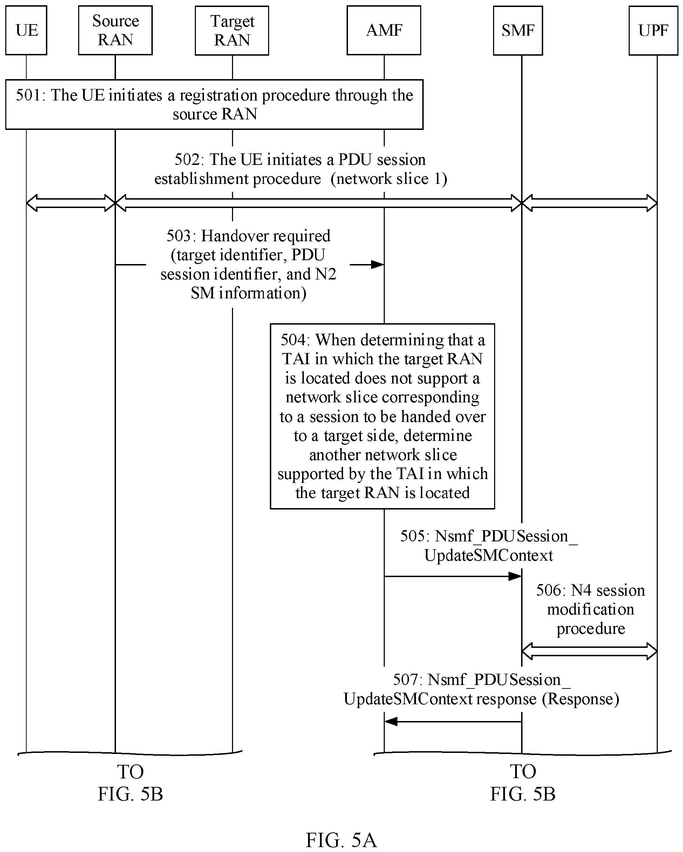

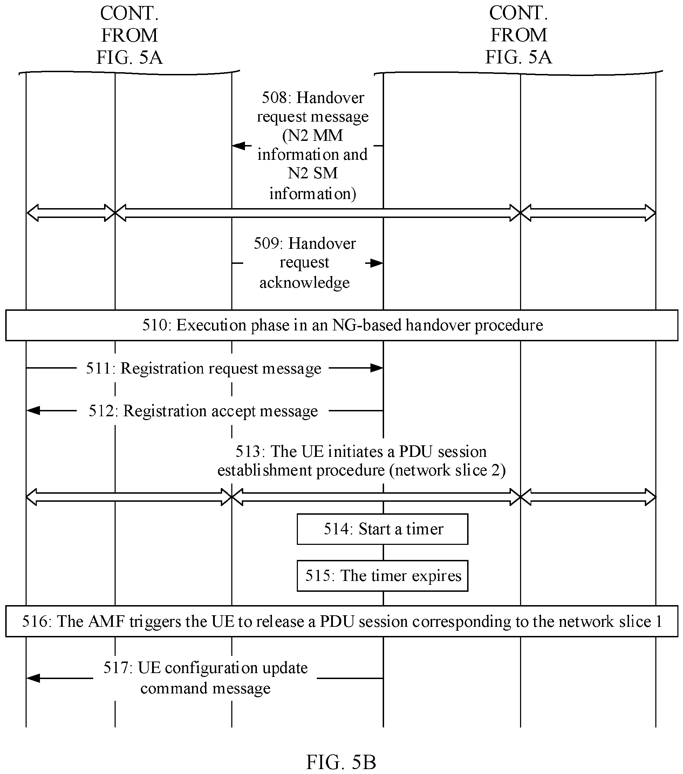

FIG. 5A and FIG. 5B are a schematic diagram of a wireless communication method according to an embodiment of this application. In the method, the SMF is unaware of a mapping between slices, and the AMF indicates the target RAN to hand over the PDU session established on the source side to a slice that can be supported by the target RAN.

The method includes the following steps.

Step 501 to step 504 are the same as step 401 to step 404. Refer to the foregoing descriptions.

Step 505: The AMF invokes a service-oriented operation Nsmf_PDUSession_UpdateSMContext of the SMF, where the service-oriented operation includes a PDU session ID, a target ID, and N2 SM information.

Step 506: After receiving the parameters from the AMF, the SMF initiates an N4 session modification procedure.

Step 507: The SMF sends, to the AMF, an Nsmf_PDUSession_UpdateSMContext response carrying N2 SM (the PDU session ID and S-NSSAI-1).

Because the SMF does not sense a slice capability of the target side RAN, the SMF sends slice information (namely, the network slice 1) corresponding to the PDU session to the target RAN through the AMF, and the target RAN further determines whether the PDU session can be handed over to the target side.

Step 508: The AMF sends a handover request message to the target RAN, where the handover request message carries the PDU session ID, S-NSSAI-2, indication information, N2 MM, and the N2 SM (the PDU session ID and S-NSSAI-1).

The indication information indicates the target RAN to map a session corresponding to the PDU session ID to a network slice 2 corresponding to S-NSSAI-2. Alternatively, it is understood that the indication information indicates the target RAN to transmit a data packet of a first application through the network slice 2.

The N2 MM information includes security information and a mobility restriction list.

The N2 SM information includes the PDU session ID and an identifier (S-NSSAI-1) of a network slice corresponding to the PDU session.

It can be learned that for a same PDU session, slice information sent by the AMF to the target RAN and slice information sent by the SMF to the target RAN are different. The AMF indicates the target RAN to perform a handover based on S-NSSAI-2. It may be understood that a priority of the indication information sent by the AMF to the target RAN is higher than a priority of the N2 SM information sent by the SMF to the target RAN.

Step 509: The target RAN determines, based on the indication information of the AMF, to hand over a session corresponding to the received PDU session ID to the target side, where a resource of the PDU session on the target side is a resource corresponding to the network slice 2. The target RAN returns handover request ack to the AMF.

Step 510 to step 517 are the same as step 411 to step 418. Refer to the foregoing descriptions.

Based on the foregoing solution, the AMF indicates the SMF to modify a network slice corresponding to an ongoing PDU session to a slice that can be supported by the target RAN, to ensure that the target RAN can smoothly hand over the PDU session. In addition, after the handover is completed, the AMF indicates the UE to establish a new session, where a network slice corresponding to the new session can be supported by the target RAN, to ensure service continuity.

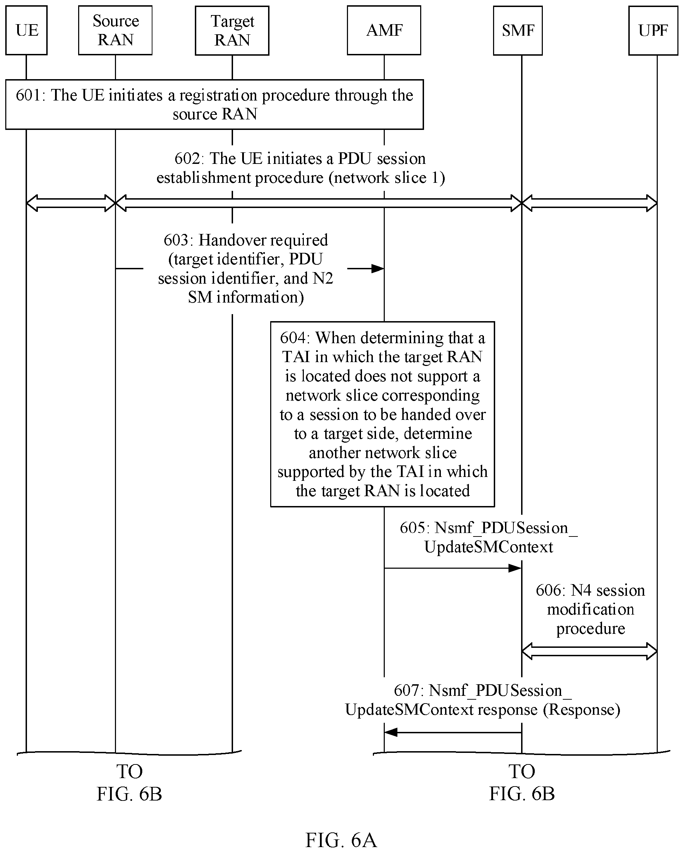

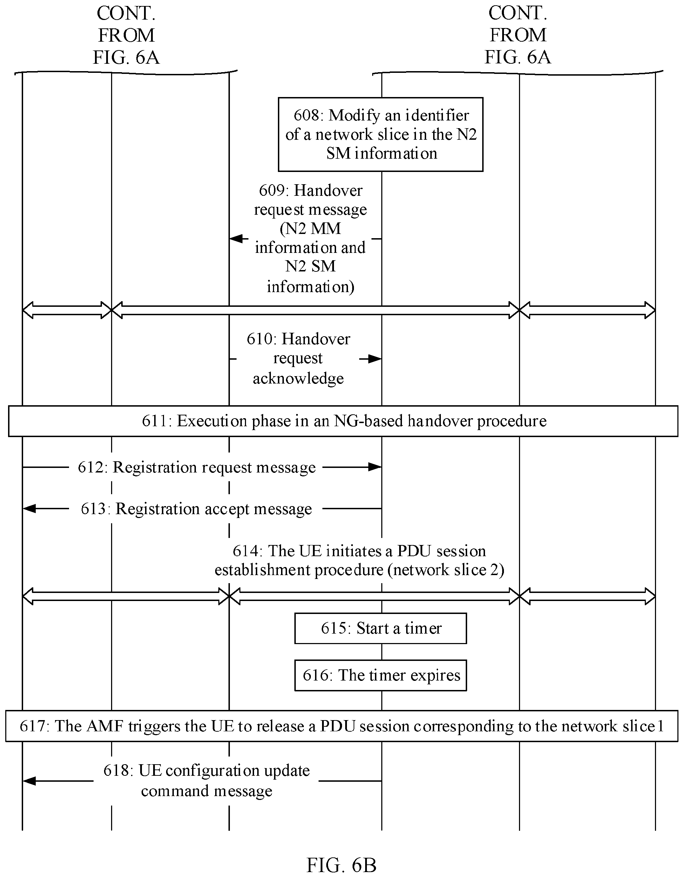

FIG. 6A and FIG. 6B are a schematic diagram of a wireless communication method according to an embodiment of this application. In the method, in a handover preparation phase, after the AMF receives N2 SM from the SMF (where the target RAN does not support the slice information included in the N2 SM), the AMF modifies the slice information included in the N2 SM. The modified slice information included in the N2 SM can be supported by the target RAN, to ensure that the target RAN can successfully hand over the PDU session to the target side.

The method includes the following steps.

Step 601 to step 607 are the same as step 501 to step 507. Refer to the foregoing descriptions.

Step 608: The AMF modifies an identifier of the network slice in the N2 SM information.

The N2 SM information before the modification is a specific example of the second information described in the foregoing solution, and the N2 SM information after the modification is a specific example of the third information described in the foregoing solution.

Specifically, after receiving the Nsmf_PDUSession_UpdateSMContext response message sent by the SMF, the AMF modifies the N2 SM information, and replaces S-NSSAI-1 in the N2 SM information with S-NSSAI-2.

Step 609: The AMF sends a handover request message to the target RAN, where the handover request message carries N2 MM and N2 SM (the PDU session ID and S-NSSAI-2).

The N2 MM information includes security information and a mobility restriction list.

The N2 SM information includes the PDU session ID and an identifier (S-NSSAI-2) of a network slice corresponding to the PDU session.

It can be learned that the AMF modifies a network slice corresponding to the PDU session to be switched to the target side from the network slice 1 to the network slice 2, to indicate the target RAN to perform a handover procedure based on the network slice 2.

Step 610: The target RAN determines, based on the N2 SM information, to hand over a session corresponding to the received PDU session ID to the target side, where a resource of the PDU session on the target side is a resource corresponding to the network slice 2. The target RAN returns handover request ack to the AMF.

Step 611 to step 618 are the same as step 510 to step 517. Refer to the foregoing descriptions.

Based on this solution, in a handover preparation phase, after the AMF receives N2 SM information from the SMF (where the target RAN does not support the slice information included in the N2 SM information), the AMF modifies the slice information included in the N2 SM information. The modified slice information included in the N2 SM information can be supported by the target RAN, to ensure that the target RAN can successfully hand over the PDU session to the target side. In addition, after the handover is completed, the AMF indicates the UE to establish a new session, where a network slice corresponding to the new session can be supported by the target RAN, to ensure service continuity.

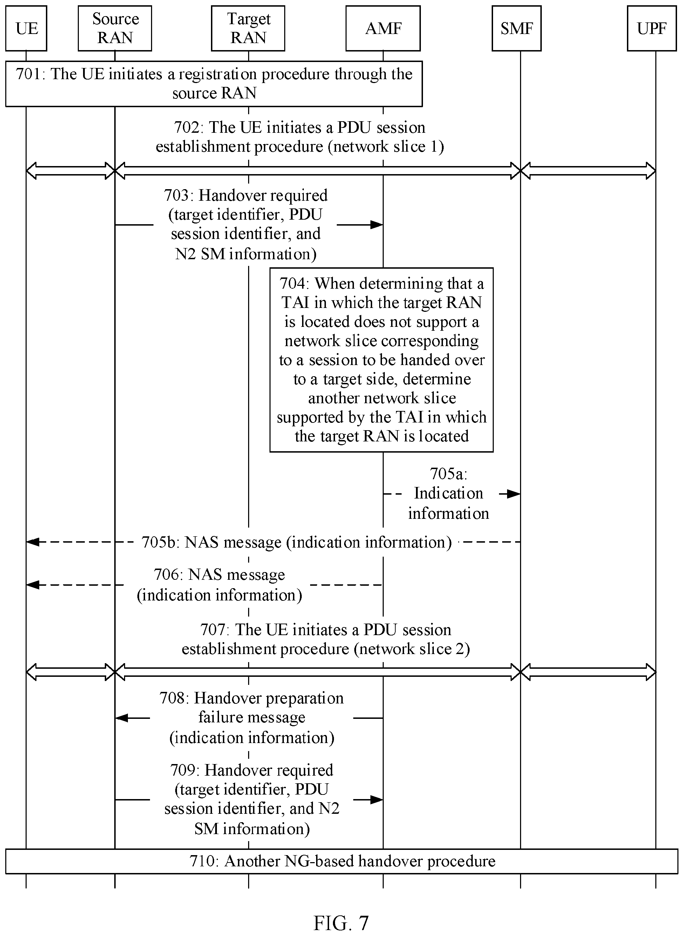

FIG. 7 is a schematic diagram of a wireless communication method according to an embodiment of this application. In the foregoing embodiments corresponding to FIG. 3A to FIG. 6B, after the handover is completed, the core network triggers the UE to establish the new PDU session. In Embodiment 5 corresponding to FIG. 7, before the handover, the core network triggers the UE to establish the new PDU session, and then triggers the handover procedure. Because the target RAN supports the network slice corresponding to the new PDU session, the target RAN can smoothly hand over the new PDU session to the target side.

The method includes the following steps.

Step 701 to step 704 are the same as step 301 to step 304. Refer to the foregoing descriptions.

Step 705a: The AMF sends indication information to the SMF, where the indication information indicates the SMF to trigger the UE to initiate an establishment procedure of a new session associated with the network slice 2.

The indication information is a specific example of the fourth indication information in the foregoing described solution. It may also be understood that the indication information indicates the SMF to trigger the UE to initiate, through the source RAN, an establishment procedure of a new session corresponding to the network slice 2.

Step 705b: The SMF sends a non-access stratum (non-access stratum, NAS) message to the UE, where the non-access stratum message carries indication information, and the indication information is used to trigger the UE to initiate the establishment procedure of the new session associated with the network slice 2.

Alternatively, it may be understood that the indication information is used to trigger the UE to initiate, through the source RAN, the establishment procedure of the new session corresponding to the network slice 2.

In another implementation method, step 705a and step 705b are not performed, but the following step 706 is performed.

Step 706: The AMF sends a NAS message to the UE, where the NAS message carries indication information, and the indication information is used to trigger the UE to initiate an establishment procedure of a new session associated with the network slice 2.

Alternatively, it may be understood that the indication information is used to trigger the UE to initiate, through the source RAN, the establishment procedure of the new session corresponding to the network slice 2.

Step 707: After receiving the indication information, the UE initiates the establishment procedure of the new session through the source RAN.

The new session corresponds to the network slice 2. The new session is used to transmit a data packet of a first application.

Step 708: After the new PDU session is established, the AMF sends a handover preparation failure (HANDOVER PREPARATION FAILURE) message to the source RAN, where the handover preparation failure message carries indication information, and the indication information indicates the source RAN to re-initiate an NG-based handover procedure.

Because the new PDU session corresponding to the network slice 2 is established on the source RAN side, and information related to the PDU session is not included in step 703, the AMF needs to indicate the source RAN to re-initiate an NG-based handover procedure. In this way, the source RAN may send the information related to the PDU session corresponding to the network slice 2 to the core network.

Step 709: The source RAN re-initiates an NG-based handover, and sends a handover required message to the AMF, where the handover required message carries the target ID, the PDU session ID corresponding to the session to be handed over to the target side, and the N2 SM information.

The target ID includes a TAI in which the target RAN is located. The PDU session corresponding to the session to be handed over to the target side includes both the PDU session corresponding to the network slice 1 and the PDU session corresponding to the network slice 2.

Step 710: For another NG-based handover procedure, refer to steps in the conventional technology.

Because the target RAN supports only the network slice 2, the target RAN can only allow a handover of the PDU session corresponding to the network slice 2 to the target side, and refuse to switch the PDU session corresponding to the network slice 1 to the target side.

Based on this solution, before the handover, the core network triggers the UE to establish a new PDU session, and then triggers a handover procedure. Because the target RAN supports a network slice corresponding to the new PDU session, the target RAN can smoothly hand over the new PDU session to the target side, thereby ensuring service continuity.

It should be noted that, for any embodiment in the embodiments respectively corresponding to FIG. 3A to FIG. 7, that the UE previously transmits an application data packet through the PDU session corresponding to the network slice 1 and subsequently transmits the application data packet on the new PDU session may be understood as that because the network slice 1 is unavailable on the target side, the UE needs to transmit service data through the new PDU session corresponding to the network slice 2. An implementation method may be as follows: A UE route selection policy (UE Route Selection Policy, URSP) configured on a UE side indicates that the network slice 1 and the network slice 2 may be associated with a same application (application). When both the network slice 1 and the network slice 2 are available, a priority of the network slice 1 is high. In other words, the UE preferentially accesses the application through the network slice 1. When the network slice 1 is unavailable, the UE accesses the application through the network slice 2.

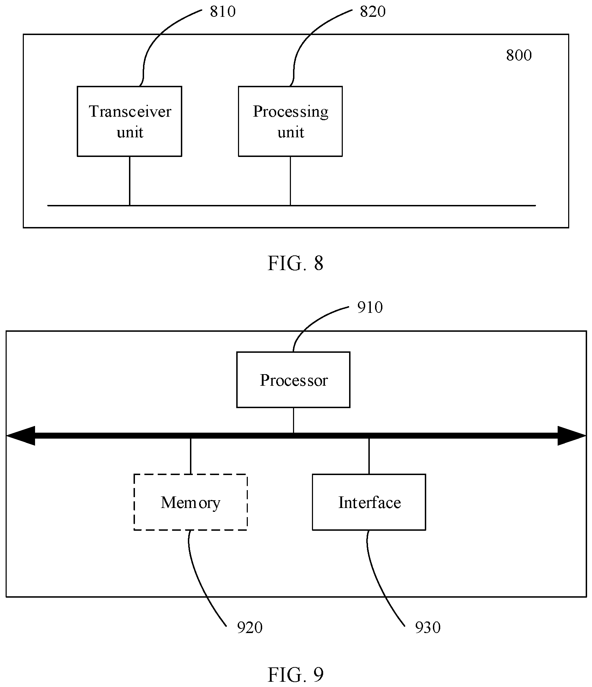

FIG. 8 is a schematic diagram of a communication apparatus according to an embodiment of this application. The apparatus is configured to implement steps performed by the corresponding mobility management network element or terminal device in the foregoing embodiments. As shown in FIG. 8, the apparatus 800 includes a transceiver unit 810 and a processing unit 820.

In a first embodiment, if the communication apparatus is a mobility management network element or a chip used for a mobility management network element,
the transceiver unit 810 is configured to receive a handover request from a source access network device, where the handover request includes an identifier of a first session, the first session corresponds to a first network slice, and the first session is used to transmit a data packet of a first application; and the processing unit 820 is configured to: when determining that a target access network device does not support the first network slice, determine a second network slice supported by the target access network device, and trigger the target access network device to transmit the data packet of the first application through the second network slice.

In a possible implementation method, the first network slice and the second network slice can access a same data network; and/or a session management network element and/or a user plane network element corresponding to the first session support/supports both the first network slice and the second network slice.

In a possible implementation method, the transceiver unit 810 is further configured to: send an identifier of the second network slice to the session management network element; and receive first information from the session management network element, where the first information includes the identifier of the second network slice; and that the processing unit 820 is configured to trigger the target access network device to transmit the data packet of the first application through the second network slice specifically includes: the processing unit 820 is configured to send the first information to the target access network device through the transceiver unit 810, where the first information is used to trigger the target access network device to transmit the data packet of the first application through the second network slice.

In a possible implementation method, the transceiver unit 810 is further configured to send an identifier of the second network slice and first indication information to the target access network device, where the first indication information indicates the target access network device to transmit the data packet of the first application through the second network slice.

In a possible implementation method, the transceiver unit 810 is further configured to receive second information from the session management network element, and the second information includes an identifier of the first network slice; the processing unit 820 is further configured to replace the identifier of the first network slice in the second information with an identifier of the second network slice, to obtain third information; and that the processing unit 820 is configured to trigger the target access network device to transmit the data packet of the first application through the second network slice specifically includes: the processing unit 820 is configured to send the third information to the target access network device through the transceiver unit 810, where the third information is used to trigger the target access network device to transmit the data packet of the first application through the second network slice.

In a possible implementation method, the transceiver unit 810 is further configured to send, to the terminal device, an identifier of a network slice allowed to be accessed and second indication information, where the network slice allowed to be accessed includes the first network slice and the second network slice, and the second indication information indicates that the target access network device does not support the first network slice but supports the second network slice.

In a possible implementation method, the processing unit 820 is further configured to: start a timer; and when the timer expires, trigger release of the first session.

In a possible implementation method, that the processing unit 820 is configured to trigger release of the first session specifically includes: the processing unit 820 is configured to release the first session; or the processing unit 820 is configured to send, to the terminal device through the transceiver unit 810, information that indicates the terminal device to release the first session.

In a possible implementation method, the transceiver unit 810 is further configured to send third indication information to the terminal device, where the third indication information is used to trigger the terminal device to initiate an establishment procedure of a second session through the source access network device, the second session corresponds to the second network slice, and the second session is used to transmit the data packet of the first application on the target access network device.

In a possible implementation method, the transceiver unit 810 is further configured to send fourth indication information to the session management network element, where the fourth indication information indicates the session management network element to trigger the terminal device to initiate an establishment procedure of a second session through the source access network device, the second session corresponds to the second network slice, and the second session is used to transmit the data packet of the first application on the target access network device.

In a possible implementation method, the transceiver unit 810 is further configured to send a handover preparation failure message to the source access network device, where the handover preparation failure message includes fifth indication information, and the fifth indication information indicates the source access network device to re-initiate an NG-based handover procedure.

In a second embodiment, if the communication apparatus is a terminal device or a chip used in a terminal device,
the transceiver unit 810 is configured to: send a data packet of a first application to the source access network device in a first session, where the first session corresponds to a first network slice; and receive indication information after the terminal device is handed over from the source access network device to the target access network device; and the processing unit 820 is configured to initiate, based on the indication information through the target access network device, an establishment procedure of a second session, where the second session corresponds to a second network slice, and the second session is used to transmit the data packet of the first application.

In a possible implementation method, the indication information is from a session management network element, and the indication information is used to trigger the terminal device to initiate the establishment procedure of the second session.

In a possible implementation method, the indication information is from a mobility management network element, and the indication information indicates that the target access network device does not support the first network slice but supports the second network slice.

In a possible implementation method, the processing unit 820 is further configured to release, based on the indication information, the first session.

In a possible implementation method, the transceiver unit 810 is further configured to receive, from the mobility management network element receives information, that indicates the terminal device to release the first session; and the processing unit 820 is further configured to release, based on the information that indicates the terminal device to release the first session, the first session.

In a third embodiment, if the communication apparatus is a terminal device or a chip used in a terminal device,
the transceiver unit 810 is configured to: send a data packet of a first application to the source access network device in a first session, where the first session corresponds to a first network slice; and receive, before the terminal device is handed over from the source access network device to the target access network device, indication information; the processing unit 820 is configured to initiate, based on the indication information through the source access network device, an establishment procedure of a second session, where the second session corresponds to a second network slice, and the second session is used to transmit a data packet of the first application on the target access network device.

In a possible implementation method, the indication information is from a session management network element or a mobility management network element, and the indication information is used to trigger the terminal device to initiate the establishment procedure of the second session.

In a possible implementation method, the processing unit 820 is further configured to release, based on the indication information, the first session.

Optionally, the communication apparatus 800 may further include a storage unit. The storage unit is configured to store data or instructions (which may also be referred to as code or a program). The foregoing units may interact with or be coupled to the storage unit, to implement a corresponding method or function. For example, the processing unit 820 may read the data or the instructions in the storage unit, so that the communication apparatus implements the methods in the foregoing embodiments.

It should be understood that division into units in the apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented through a hardware integrated logic circuit in a processor element, or may be implemented in the form of software invoked by the processing element.

In an example, the unit in any one of the foregoing apparatuses may be one or more integrated circuits configured to implement the foregoing method, for example, one or more application-specific integrated circuits (application-specific integrated circuit, ASIC), or one or more microprocessors (digital signal processor, DSP), or one or more field programmable gate arrays (field programmable gate array, FPGA), or a combination of at least two of these integrated circuit forms. For another example, when the units in the apparatus may be implemented in a form of scheduling a program by the processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

The transceiver unit 810 may be an interface circuit of the apparatus, and is configured to receive a signal from another apparatus or send a signal to another apparatus. For example, when the apparatus is implemented as a chip, the transceiver unit 810 is an interface circuit, of the chip, that is configured to receive a signal from another chip or apparatus, or an interface circuit configured to send a signal to another chip or apparatus.

FIG. 9 is a schematic diagram of a communication apparatus according to an embodiment of this application. The communication apparatus is configured to implement operations of a mobility management network element or a terminal device in the foregoing embodiments. As shown in FIG. 9, the communication apparatus includes a processor 910 and an interface 930. Optionally, the communication apparatus further includes a memory 920. The interface 930 is configured to communicate with another device.

A method performed by a mobility management network element or a terminal device in the foregoing embodiments may be implemented by the processor 910 by invoking a program stored in a memory (which may be a memory 920 in the mobility management network element or the terminal device, or may be an external memory). In other words, the mobility management network element or the terminal device may include the processor 910, and the processor 910 invokes the program in the memory to perform the method performed by the mobility management network element or the terminal device in the foregoing method embodiments. The processor herein may be an integrated circuit having a signal processing capability, for example, a CPU. The mobility management network element or the terminal device may be implemented through one or more integrated circuits configured to implement the foregoing method, for example, one or more ASICs, one or more microprocessors DSPs, one or more FPGAs, or a combination of at least two of the integrated circuit forms. Alternatively, the foregoing implementations may be combined.

Specifically, functions/implementation processes of the transceiver unit 810 and the processing unit 820 in FIG. 8 may be implemented by the processor 910 in the communication apparatus 900 shown in FIG. 9 by invoking computer-executable instructions stored in the memory 920. Alternatively, a function/an implementation process of the processing unit 820 in FIG. 8 may be implemented by the processor 910 in the communication apparatus 900 shown in FIG. 9 by invoking computer-executable instructions stored in the memory 920, and a function/an implementation process of the transceiver unit 810 in FIG. 8 may be implemented by the interface 930 in the communication apparatus 900 shown in FIG. 9.

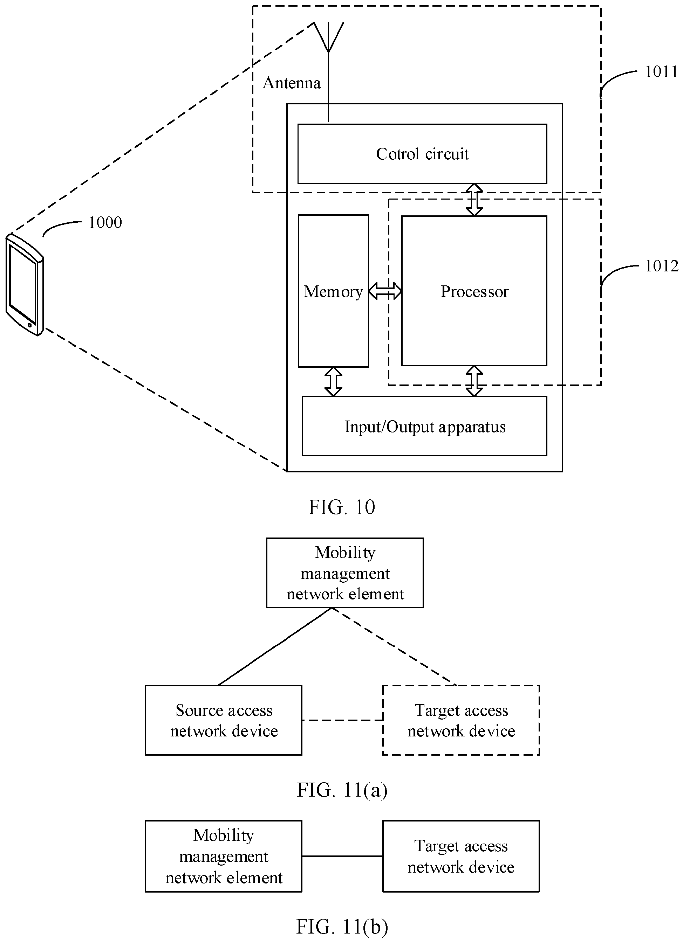

FIG. 10 is a schematic diagram of a structure of a terminal device. The terminal device may be configured to perform an operation performed by the terminal device in any one of the foregoing method embodiments. For ease of description, FIG. 10 shows only main components of the terminal device. As shown in FIG. 10, the terminal device 1000 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form through the antenna. When data is sent to the terminal device, the radio frequency circuit receives a radio frequency signal through the antenna, further converts the radio frequency signal into a baseband signal, and outputs the baseband signal to the processor. The processor converts the baseband signal into data, and processes the data.

For ease of description, FIG. 10 shows only one memory and one processor. In an actual terminal device, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 10 integrates functions of the baseband processor and the central processing unit. A person skilled in the art may understand that the baseband processor and the central processing unit may alternatively be processors independent of each other, and are interconnected through a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have sending and receiving functions may be considered as a transceiver unit 1011 of the terminal device 1000, and the processor having a processing function may be considered as a processing unit 1012 of the terminal device 1000. As shown in FIG. 10, the terminal device 1000 includes the transceiver unit 1011 and the processing unit 1012. The transceiver unit may also be referred to as a transceiver, a transceiver machine, a transceiver apparatus, or the like. Optionally, a component that is in the transceiver unit 1011 and that is configured to implement a receiving function may be considered as a receiving unit, and a component that is in the transceiver unit 1011 and that is configured to implement a sending function may be considered as a sending unit. In other words, the transceiver unit 1011 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

To ensure service continuity in a process in which a terminal device is handed over from a source access network device to a target access network device, as shown in FIG. 11(a), this application provides a communication system. The system includes a source access network device and a mobility management network element. Optionally, the system further includes a target access network device.

The source access network device is configured to: send a handover request to a mobility management network element, where the handover request includes an identifier of a first session, the first session corresponds to a first network slice, and the first session is used to transmit a data packet of a first application; and the mobility management network element is configured to: receive the handover request from the source access network device; when determining that the target access network device does not support the first network slice, determine a second network slice supported by the target access network device; and trigger the target access network device to transmit the data packet of the first application through the second network slice.

In a possible implementation method, the first network slice and the second network slice can access a same data network; and/or a session management network element and/or a user plane network element corresponding to the first session support/supports both the first network slice and the second network slice.

In a possible implementation method, the mobility management network element is further configured to: send an identifier of the second network slice to the session management network element; and receive first information from the session management network element, where the first information includes the identifier of the second network slice; and that the mobility management network element is configured to trigger the target access network device to transmit the data packet of the first application through the second network slice specifically includes: the mobility management network element is configured to send the first information to the target access network device, where the first information is used to trigger the target access network device to transmit the data packet of the first application through the second network slice.

In a possible implementation method, the mobility management network element is further configured to send the identifier of the second network slice and first indication information to the target access network device, where the first indication information indicates the target access network device to transmit the data packet of the first application through the second network slice.

In a possible implementation method, the mobility management network element is further configured to: receive second information from the session management network element, where the second information includes an identifier of the first network slice; replace the identifier of the first network slice in the second information with an identifier of the second network slice, to obtain third information; and that the mobility management network element is configured to trigger the target access network device to transmit the data packet of the first application through the second network slice specifically includes: the mobility management network element is configured to send the third information to the target access network device, where the third information is used to trigger the target access network device to transmit the data packet of the first application through the second network slice.

In a possible implementation method, the mobility management network element is further configured to send, to the terminal device, an identifier of a network slice allowed to be accessed and second indication information, where the network slice allowed to be accessed includes the first network slice and the second network slice, and the second indication information indicates that the target access network device does not support the first network slice but supports the second network slice.

In a possible implementation method, the mobility management network element is further configured to: start a timer; and when the timer expires, trigger release of the first session.

In a possible implementation method, that the mobility management network element is configured to trigger release of the first session specifically includes: the mobility management network element is configured to release the first session; or the mobility management network element is configured to send, to the terminal device, information that indicates the terminal device to release the first session.

In a possible implementation method, the mobility management network element is further configured to send third indication information to the terminal device, where the third indication information is used to trigger the terminal device to initiate an establishment procedure of a second session through the source access network device, the second session corresponds to the second network slice, and the second session is used to transmit the data packet of the first application on the target access network device.

In a possible implementation method, the mobility management network element is further configured to send fourth indication information to the session management network element, where the fourth indication information indicates the session management network element to trigger the terminal device to initiate an establishment procedure of a second session through the source access network device, the second session corresponds to the second network slice, and the second session is used to transmit the data packet of the first application on the target access network device.

In a possible implementation method, the mobility management network element is further configured to send a handover preparation failure message to the source access network device, where the handover preparation failure message includes fifth indication information, and the fifth indication information indicates the source access network device to re-initiate an NG-based handover procedure.

In a possible implementation method, the target access network device is configured to transmit the data packet of the first application through the second network slice based on triggering of the mobility management network element.

Specific implementation of the foregoing solution is described in detail in the foregoing method embodiments, and details are not described herein again.

The system shown in FIG. 11(a) may be used in a fifth generation (5th generation, 5G) network architecture shown in FIG. 1(a) or FIG. 1(b), or certainly may be used in a future network architecture, for example, a sixth generation (6th generation, 6G) network architecture. This is not limited in this application.

To ensure service continuity in a process in which a terminal device is handed over from a source access network device to a target access network device, as shown in FIG. 11(b), this application provides a communication system. The system includes a target access network device and a mobility management network element.

The mobility management network element is configured to: receive a handover request from the source access network device, where the handover request includes an identifier of a first session, the first session corresponds to a first network slice, and the first session is used to transmit a data packet of a first application; and when determining that the target access network device does not support the first network slice, determine a second network slice supported by the target access network device; and trigger the target access network device to transmit the data packet of the first application through the second network slice. The target access network device is configured to transmit the data packet of the first application through the second network slice based on triggering of the mobility management network element.

In a possible implementation method, the first network slice and the second network slice can access a same data network; and/or a session management network element and/or a user plane network element corresponding to the first session support/supports both the first network slice and the second network slice.

In a possible implementation method, the mobility management network element is further configured to: send an identifier of the second network slice to the session management network element; and receive first information from the session management network element, where the first information includes the identifier of the second network slice; and that the mobility management network element is configured to trigger the target access network device to transmit the data packet of the first application through the second network slice specifically includes: the mobility management network element is configured to send the first information to the target access network device, where the first information is used to trigger the target access network device to transmit the data packet of the first application through the second network slice.

In a possible implementation method, the mobility management network element is further configured to send the identifier of the second network slice and first indication information to the target access network device, where the first indication information indicates the target access network device to transmit the data packet of the first application through the second network slice.

In a possible implementation method, the mobility management network element is further configured to: receive second information from the session management network element, where the second information includes an identifier of the first network slice; replace the identifier of the first network slice in the second information with an identifier of the second network slice, to obtain third information; and that the mobility management network element is configured to trigger the target access network device to transmit the data packet of the first application through the second network slice specifically includes: the mobility management network element is configured to send the third information to the target access network device, where the third information is used to trigger the target access network device to transmit the data packet of the first application through the second network slice.

In a possible implementation method, the mobility management network element is further configured to send, to the terminal device, an identifier of a network slice allowed to be accessed and second indication information, where the network slice allowed to be accessed includes the first network slice and the second network slice, and the second indication information indicates that the target access network device does not support the first network slice but supports the second network slice.

In a possible implementation method, the mobility management network element is further configured to: start a timer; and when the timer expires, trigger release of the first session.

In a possible implementation method, that the mobility management network element is configured to trigger release of the first session specifically includes: the mobility management network element is configured to release the first session; or the mobility management network element is configured to send, to the terminal device, information that indicates the terminal device to release the first session.

In a possible implementation method, the mobility management network element is further configured to send third indication information to the terminal device, where the third indication information is used to trigger the terminal device to initiate an establishment procedure of a second session through the source access network device, the second session corresponds to the second network slice, and the second session is used to transmit the data packet of the first application on the target access network device.

In a possible implementation method, the mobility management network element is further configured to send fourth indication information to the session management network element, where the fourth indication information indicates the session management network element to trigger the terminal device to initiate an establishment procedure of a second session through the source access network device, the second session corresponds to the second network slice, and the second session is used to transmit the data packet of the first application on the target access network device.

In a possible implementation method, the mobility management network element is further configured to send a handover preparation failure message to the source access network device, where the handover preparation failure message includes fifth indication information, and the fifth indication information indicates the source access network device to re-initiate an NG-based handover procedure.

The system shown in FIG. 11(b) may be used in a 5G generation network architecture shown in FIG. 1(a) or FIG. 1(b), or certainly may be used in a future network architecture, for example, a 6G generation network architecture. This is not limited in this application.

A person of ordinary skill in the art may understand that various numbers such as "first" and "second" in this application are merely used for differentiation for ease of description, and are not used to limit the scope of embodiments of this application or represent a sequence. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. The term "a plurality of' means two or more, and another quantifier is similar to this.

It should be further understood that sequence numbers of the processes do not mean execution sequences in various embodiments of this application. The execution sequences of the processes should be determined according to functions and internal logic of the processes, and should not be construed as any limitation on the implementation processes of embodiments of the present invention.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein.

All or some of the embodiments may be implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid-state drive (solid-state disk, SSD)), or the like.

The various illustrative logical units and circuits described in embodiments of this application may implement or operate the described functions through a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a random access memory (Random Access Memory, RAM), a flash memory, a read-only memory (Read-Only Memory, ROM), an EPROM memory, an EEPROM memory, a register, a hard disk, a removable magnetic disk, a CD-ROM, or a storage medium of any other form in the art. For example, the storage medium may connect to a processor so that the processor may read information from the storage medium and write information to the storage medium. Alternatively, the storage medium may be integrated into a processor. The processor and the storage medium may be disposed in the ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In one or more exemplary designs, the functions described in this application may be implemented through hardware, software, firmware, or any combination thereof. If the present invention is implemented by software, these functions may be stored in a computer-readable medium or are transmitted to the computer-readable medium in a form of one or more instructions or code. The computer-readable medium is either a computer storage medium or a communication medium that enables a computer program to move from one place to another. The storage medium may be an available medium that may be accessed by any general-purpose or dedicated computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of instructions or a data structure or in a form that can be read by a general or special computer or a general or special processor. In addition, any connection may be appropriately defined as a computer-readable medium. For example, if software is transmitted from a website, a server, or another remote resource through a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (English: Digital Versatile Disc, DVD for short), a floppy disc, and a Blu-ray disc. The disc usually copies data in a magnetic manner, and the disk usually optically copies data in a laser manner. The foregoing combination may also be included in the computer-readable medium.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application. According to the foregoing description of this specification in this application, technologies in the art may use or implement the content of this application. Any modification based on the disclosed content shall be considered obvious in the art. The basic principles described in this application may be applied to other variations without departing from the essence and scope of this application. Therefore, the content disclosed in this application is not limited to the described embodiments and designs but may also be extended to a maximum scope that is consistent with the principles and disclosed new features of this application.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A wireless communication method, applied to a handover procedure in which a terminal device is handed over from a source access network device to a target access network device, and comprising:
receiving, by a mobility management network element, a handover request from the source access network device, wherein the handover request comprises an identifier of a first session, the first session corresponds to a first network slice, and the first session is used to transmit a data packet of a first application;
when determining that the target access network device does not support the first network slice, determining, by the mobility management network element, a second network slice supported by the target access network device; and
triggering, by the mobility management network element, the target access network device to transmit a data packet of the first application through the second network slice.

2. The method according to claim 1, wherein the first network slice and the second network slice can access a same data network; and/or
a session management network element and/or a user plane network element corresponding to the first session support/supports both the first network slice and the second network slice.

3. The method according to claim 1 or 2, further comprising:
sending, by the mobility management network element, an identifier of the second network slice to the session management network element; and
receiving, by the mobility management network element, first information from the session management network element, wherein the first information comprises the identifier of the second network slice; and
the triggering, by the mobility management network element, the target access network device to transmit the data packet of the first application through the second network slice comprises:
sending, by the mobility management network element, the first information to the target access network device, wherein the first information is used to trigger the target access network device to transmit the data packet of the first application through the second network slice.

4. The method according to claim 1 or 2, further comprising:
sending, by the mobility management network element, an identifier of the second network slice and first indication information to the target access network device, wherein the first indication information indicates the target access network device to transmit the data packet of the first application through the second network slice.

5. The method according to claim 1 or 2, further comprising:
receiving, by the mobility management network element, second information from the session management network element, wherein the second information comprises an identifier of the first network slice; and
replacing, by the mobility management network element, the identifier of the first network slice in the second information with an identifier of the second network slice, to obtain third information; and
the triggering, by the mobility management network element, the target access network device to transmit the data packet of the first application through the second network slice comprises:
sending, by the mobility management network element, the third information to the target access network device, wherein the third information is used to trigger the target access network device to transmit the data packet of the first application through the second network slice.

6. The method according to any one of claims 1 to 5, further comprising:
sending, by the mobility management network element to the terminal device, an identifier of a network slice allowed to be accessed and second indication information, wherein the network slice allowed to be accessed comprises the first network slice and the second network slice, and the second indication information indicates that the target access network device does not support the first network slice but supports the second network slice.

7. The method according to claim 6, further comprising:
starting, by the mobility management network element, a timer; and
when the timer expires, triggering, by the mobility management network element, release of the first session.

8. The method according to claim 7, wherein the triggering, by the mobility management network element, release of the first session comprises:
releasing, by the mobility management network element, the first session; or
sending, by the mobility management network element to the terminal device, information that indicates the terminal device to release the first session.

9. The method according to claim 1 or 2, further comprising:
sending, by the mobility management network element, third indication information to the terminal device, wherein the third indication information is used to trigger the terminal device to initiate an establishment procedure of a second session through the source access network device, the second session corresponds to the second network slice, and the second session is used to transmit the data packet of the first application on the target access network device.

10. The method according to claim 1 or 2, further comprising:
sending, by the mobility management network element, fourth indication information to the session management network element, wherein the fourth indication information indicates the session management network element to trigger the terminal device to initiate an establishment procedure of a second session through the source access network device, the second session corresponds to the second network slice, and the second session is used to transmit the data packet of the first application on the target access network device.

11. The method according to claim 9 or 10, further comprising:
sending, by the mobility management network element, a handover preparation failure message to the source access network device, wherein the handover preparation failure message comprises fifth indication information, and the fifth indication information indicates the source access network device to re-initiate an NG-based handover procedure.

12. A wireless communication method, applied to a handover procedure in which a terminal device is handed over from a source access network device to a target access network device, and comprising:
sending, by the terminal device, a data packet of a first application to the source access network device in a first session, wherein the first session corresponds to a first network slice;
receiving, by the terminal device after the terminal device is handed over from the source access network device to the target access network device, indication information; and
initiating, by the terminal device based on the indication information and through the target access network device, an establishment procedure of a second session, wherein the second session corresponds to a second network slice, and the second session is used to transmit a data packet of the first application.

13. The method according to claim 12, wherein the indication information is from a session management network element, and the indication information is used to trigger the terminal device to initiate the establishment procedure of the second session.

14. The method according to claim 12, wherein the indication information is from a mobility management network element, and the indication information indicates that the target access network device does not support the first network slice but supports the second network slice.

15. The method according to any one of claims 12 to 14, further comprising:
releasing, by the terminal device based on the indication information, the first session.

16. The method according to any one of claims 12 to 14, further comprising:
receiving, by the terminal device from the mobility management network element, information that indicates the terminal device to release the first session; and
releasing, by the terminal device based on the information that indicates the terminal device to release the first session, the first session.

17. A wireless communication method, applied to a handover procedure in which a terminal device is handed over from a source access network device to a target access network device, and comprising:
sending, by the terminal device, a data packet of a first application to the source access network device in a first session, wherein the first session corresponds to a first network slice;
receiving, by the terminal device, before the terminal device is handed over from the source access network device to the target access network device, indication information; and
initiating, by the terminal device based on the indication information through the source access network device, an establishment procedure of a second session, wherein the second session corresponds to a second network slice, and the second session is used to transmit the data packet of the first application on the target access network device.

18. The method according to claim 17, wherein the indication information is from a session management network element or a mobility management network element, and the indication information is used to trigger the terminal device to initiate the establishment procedure of the second session.

19. The method according to claim 17 or 18, further comprising:
releasing, by the terminal device based on the indication information, the first session.

20. A communication apparatus, used in a handover procedure in which a terminal device is handed over from a source access network device to a target access network device, and comprising:
a transceiver unit, configured to receive a handover request from the source access network device, wherein the handover request comprises an identifier of a first session, the first session corresponds to a first network slice, and the first session is used to transmit a data packet of a first application; and
a processing unit, configured to: when determining that the target access network device does not support the first network slice, determine a second network slice supported by the target access network device; and trigger the target access network device to transmit the data packet of the first application through the second network slice.

21. The apparatus according to claim 20, wherein the first network slice and the second network slice can access a same data network; and/or
a session management network element and/or a user plane network element corresponding to the first session support/supports both the first network slice and the second network slice.

22. The apparatus according to claim 20 or 21, wherein the transceiver unit is further configured to: send an identifier of the second network slice to the session management network element; and receive first information from the session management network element, wherein the first information comprises the identifier of the second network slice; and
that the processing unit is configured to trigger the target access network device to transmit the data packet of the first application through the second network slice specifically comprises:
the processing unit is configured to send the first information to the target access network device through the transceiver unit, wherein the first information is used to trigger the target access network device to transmit the data packet of the first application through the second network slice.

23. The apparatus according to claim 20 or 21, wherein the transceiver unit is further configured to send the identifier of the second network slice and first indication information to the target access network device, wherein the first indication information indicates the target access network device to transmit the data packet of the first application through the second network slice.

24. The apparatus according to claim 20 or 21, wherein the transceiver unit is further configured to receive second information from the session management network element, wherein the second information comprises an identifier of the first network slice;
the processing unit is further configured to replace the identifier of the first network slice in the second information with an identifier of the second network slice, to obtain third information; and
that the processing unit is configured to trigger the target access network device to transmit the data packet of the first application through the second network slice specifically comprises:
the processing unit is configured to send the third information to the target access network device through the transceiver unit, wherein the third information is used to trigger the target access network device to transmit the data packet of the first application through the second network slice.

25. The apparatus according to any one of claims 20 to 24, wherein the transceiver unit is further configured to send, to the terminal device, an identifier of a network slice allowed to be accessed and second indication information, wherein the network slice allowed to be accessed comprises the first network slice and the second network slice, and the second indication information indicates that the target access network device does not support the first network slice but supports the second network slice.

26. The apparatus according to claim 25, wherein the processing unit is further configured to:
start a timer; and
when the timer expires, trigger release of the first session.

27. The apparatus according to claim 26, wherein that the processing unit is configured to trigger release of the first session specifically comprises:
the processing unit is configured to release the first session; or
the processing unit is configured to send, to the terminal device through the transceiver unit, information that indicates the terminal device to release the first session.

28. The apparatus according to claim 20 or 21, wherein the transceiver unit is further configured to send third indication information to the terminal device, wherein the third indication information is used to trigger the terminal device to initiate an establishment procedure of a second session through the source access network device, the second session corresponds to the second network slice, and the second session is used to transmit the data packet of the first application on the target access network device.

29. The apparatus according to claim 20 or 21, wherein the transceiver unit is further configured to send fourth indication information to the session management network element, wherein the fourth indication information indicates the session management network element to trigger the terminal device to initiate an establishment procedure of a second session through the source access network device, the second session corresponds to the second network slice, and the second session is used to transmit the data packet of the first application on the target access network device.

30. The apparatus according to claim 28 or 29, wherein the transceiver unit is further configured to send a handover preparation failure message to the source access network device, wherein the handover preparation failure message comprises fifth indication information, and the fifth indication information indicates the source access network device to re-initiate an NG-based handover procedure.

31. A communication apparatus, used in a handover procedure in which a terminal device is handed over from a source access network device to a target access network device, and comprising:
a transceiver unit, configured to: send a data packet of a first application to the source access network device in a first session, wherein the first session corresponds to a first network slice; and receive indication information after the terminal device is handed over from the source access network device to the target access network device; and
a processing unit, configured to initiate, based on the indication information through the target access network device, an establishment procedure of a second session, wherein the second session corresponds to a second network slice, and the second session is used to transmit the data packet of the first application.

32. The apparatus according to claim 31, wherein the indication information is from a session management network element, and the indication information is used to trigger the terminal device to initiate the establishment procedure of the second session.

33. The apparatus according to claim 31, wherein the indication information is from a mobility management network element, and the indication information indicates that the target access network device does not support the first network slice but supports the second network slice.

34. The apparatus according to any one of claims 31 to 33, wherein the processing unit is further configured to release, based on the indication information, the first session.

35. The apparatus according to any one of claims 31 to 33, wherein the transceiver unit is further configured to receive, from the mobility management network element, information that indicates the terminal device to release the first session; and
the processing unit is further configured to release, based on the information that indicates the terminal device to release the first session, the first session.

36. A communication apparatus, used in a handover procedure in which a terminal device is handed over from a source access network device to a target access network device, and comprising:
a transceiver unit, configured to: send a data packet of a first application to the source access network device in a first session, wherein the first session corresponds to a first network slice; and receive, before the terminal device is handed over from the source access network device to the target access network device, indication information; and
a processing unit, configured to initiate, based on the indication information through the source access network device, an establishment procedure of a second session, wherein the second session corresponds to a second network slice, and the second session is used to transmit the data packet of the first application on the target access network device.

37. The apparatus according to claim 36, wherein the indication information is from a session management network element or a mobility management network element, and the indication information is used to trigger the terminal device to initiate the establishment procedure of the second session.

38. The apparatus according to claim 36 or 37, wherein
the processing unit is further configured to release, based on the indication information, the first session.

39. A communication apparatus, comprising a processor, wherein the processor is coupled to a memory, and the memory is configured to store a program or instructions; and when the program or the instructions is/are executed by the processor, the apparatus is enabled to perform the method according to any one of claims 1 to 11, or the apparatus is enabled to perform the method according to any one of claims 12 to 19.

40. A communication apparatus, comprising a processor and an interface, wherein
the processor is configured to: control the apparatus to perform the method according to any one of claims 1 to 11, or control the apparatus to perform the method according to any one of claims 12 to 19; and
the processor is further configured to control the interface to communicate with another apparatus.

41. A computer-readable storage medium, wherein the computer-readable storage medium stores a computer program or instructions, and when the computer program or the instructions is/are executed, the method according to any one of claims 1 to 19 is performed.

42. A computer program product, wherein the computer program product comprises a computer program, and when the computer program is run, the method according to any one of claims 1 to 19 is performed.

43. A communication system, comprising a mobility management network element configured to perform the method according to any one of claims 1 to 11, and a source access network device configured to send a handover request to the mobility management network element.

44. The system according to claim 43, wherein the system further comprises a target access network device configured to transmit a data packet of a first application through a second network slice.

45. A communication system, comprising a mobility management network element configured to perform the method according to any one of claims 1 to 11, and a target access network device configured to transmit a data packet of a first application through a second network slice.
